# EUROPEAN PATENT APPLICATION

(11) **EP 4 755 342 A1**
(43) Date of publication of application: **10.06.2026**
(21) Application number: 24849279.5
(22) Date of filing: 02.08.2024
(51) Int. Cl.: A61C 13/00, A61C 5/70, A61C 8/00, A61C 13/083

(54) **MILL BLANK ASSEMBLY**

(30) Priority: 03.08.2023 JP 2023126825
(71) Applicant: Kuraray Noritake Dental Inc., Kurashiki-shi, Okayama 710-0801 (JP)
(72) Inventor: KONDO Yusuke, Miyoshi-shi, Aichi 470-0224 (JP); KASHIKI Nobusuke, Miyoshi-shi, Aichi 470-0224 (JP); NAKANO Kirihiro, Miyoshi-shi, Aichi 470-0224 (JP); TAJIMA Yuta, Miyoshi-shi, Aichi 470-0224 (JP)
(74) Representative: D Young & Co LLP
(86) International application number: PCT/JP2024/027636
(87) International publication number: WO 2025/028634

(57) **Abstract**

It is possible to further reduce a risk of fracture of the blank portion while maintaining an appropriate adhesive strength between the blank portion and the holding portion. A mill blank assembly (10) includes a blank portion (20), a holding portion (30) that is configured to hold the blank portion (20), and an adhesive layer (40). The adhesive layer (40) is disposed between a first adhesion surface (21) and a second adhesion surface (33), which are respective adhesion surfaces of the blank portion (20) and the holding portion (30). The adhesive layer (40) bonds the blank portion (20) and the holding portion (30) together. The second adhesion surface (33) of the holding portion (30) includes an uneven structure (36) comprising a projection portion (34) and a recess portion (35), and the projection portion (34) and the recess portion (35) are configured not to mate with each other.

## Description

### [Technical Field]

The present invention relates to a mill blank assembly.

### [Background Art]

Hitherto, there has been known a mill blank assembly for use in prosthetic treatment, such as crown treatment or implant treatment, in which a missing part of a tooth is restored with an artificial material (prosthetic material). Prior art documents (for example, see Patent Literatures 1 to 3) disclose such mill blank assemblies each of which includes a blank portion and a holding portion that holds the blank portion. One of adhesion surfaces of the blank portion and the holding portion includes a projection, while the other includes a recess portion for receiving the projection.

These conventional mill blank assemblies have a structure in which the recess portion and the projection portion are fitted together. Thus, the blank portion is susceptible to the effect of internal stress caused by the difference in thermal contraction or thermal expansion between the blank portion and the holding portion and has been at risk of fracture due to temperature changes, and further by vibration during transportation.

### [Prior Art Documents]

### [Patent Literature]

[Patent Literature 1] JP2004-507316A
[Patent Literature 2] JP2020-99600A
[Patent Literature 3] JP2021-115274A

### [Summary of Invention]

### [Problem to be solved]

The present disclosure has been made in view of the foregoing circumstances. The present disclosure makes it possible to further reduce the risk of fracture of the blank portion while maintaining an appropriate adhesive force between the blank portion and the holding portion.

### [Solution to Problem]

To achieve the above object, a mill blank assembly according to the present disclosure includes a blank portion; a holding portion that is configured to hold the blank portion; and an adhesive layer that is disposed between an adhesion surface of the blank portion and an adhesion surface of the holding portion, the adhesive layer bonding the blank portion and the holding portion together. At least one of the adhesion surface of the blank portion and the adhesion surface of the holding portion comprises an uneven structure, the uneven structure comprising a projection portion and a recess portion. The projections and the recesses are configured not to mate with each other.

### [Effects of Invention]

The present disclosure makes it possible to further reduce the risk of fracture of the blank portion, while maintaining an appropriate adhesive force between the blank portion and the holding portion.

### [Brief Description of Drawings]

[FIG. 1] FIG. 1 is a side view of a mill blank assembly according to a first embodiment and Examples 1 to 5 and 27 to 36 of the present disclosure.
[FIG. 2] FIG. 2 is a perspective view of a holding portion shown in FIG. 1.
[FIG. 3] FIG. 3 is a plan view of the holding portion shown in FIG. 1.
[FIG. 4] FIG. 4 is a sectional view taken along a line A-A of FIG. 3, with additional dashed lines of a blank portion and an adhesive layer.
[FIG. 5] FIG. 5 is a perspective view of a holding portion in a mill blank assembly according to a second embodiment and Example 6 of the present disclosure.
[FIG. 6] FIG. 6 is a plan view of the holding portion shown in FIG. 5.
[FIG. 7] FIG. 7 is a sectional view taken along a line B-B of FIG. 6.
[FIG. 8] FIG. 8 is a perspective view of a holding portion in a mill blank assembly according to a third embodiment and Examples 7, 8, 10 to 12, 15 to 17, 24 to 26, 37 and 40 of the present disclosure.
[FIG. 9] FIG. 9 is a plan view of the holding portion shown in FIG. 8.
[FIG. 10] FIG. 10 is a sectional view taken along a line C-C of FIG. 9.
[FIG. 11] FIG. 11 is a perspective view of a holding portion in a mill blank assembly according to a fourth embodiment and Example 9 of the present disclosure.
[FIG. 12] FIG. 12 is a plan view of the holding portion shown in FIG. 11.
[FIG. 13] FIG. 13 is a sectional view taken along a line D-D of FIG. 12.
[FIG. 14] FIG. 14 is a sectional view taken along a line E-E of FIG. 12.
[FIG. 15] FIG. 15 is a perspective view of a holding portion in a mill blank assembly according to a fifth embodiment and Examples 13 and 14 of the present disclosure.
[FIG. 16] FIG. 16 is a plan view of the holding portion shown in FIG. 15.
[FIG. 17] FIG. 17 is a sectional view taken along a line F-F of FIG. 16.
[FIG. 18] FIG. 18 is a perspective view of a holding portion in a mill blank assembly according to sixth and seventh embodiments and Examples 18 and 19 of the present disclosure.
[FIG. 19] FIG. 19 is a bottom view of a blank portion in the mill blank assembly according to the sixth embodiment and Example 18 of the present disclosure, as viewed from the side of a first adhesion surface.
[FIG. 20] FIG. 20 is a sectional view taken along a line G-G of FIG. 19.
[FIG. 21] FIG. 21 is a bottom view of a blank portion in a mill blank assembly according to the seventh embodiment and Example 19 of the present disclosure, as viewed from the side of a first adhesion surface.
[FIG. 22] FIG. 22 is a sectional view taken along a line H-H of FIG. 21.
[FIG. 22A] FIG. 22A is a perspective view of a holding portion in a mill blank assembly according to an eighth embodiment and Examples 38 and 39 of the present disclosure.
[FIG. 22B] FIG. 22B is a perspective view of a holding portion in a mill blank assembly according to a ninth embodiment and Examples 20 and 21 of the present disclosure.
[FIG. 22C] FIG. 22C is a perspective view of a holding portion in a mill blank assembly according to a tenth embodiment and Examples 22 and 23 of the present disclosure.
[FIG. 23] FIG. 23 shows an exploded perspective view and an exploded side view of a blank portion and a holding portion of a mill blank assembly of Comparative Example 1.
[FIG. 24] FIG. 24 shows an exploded perspective view and an exploded side view of a blank portion and a holding portion of a mill blank assembly of Comparative Example 2.

### [Detailed Description of Embodiments]

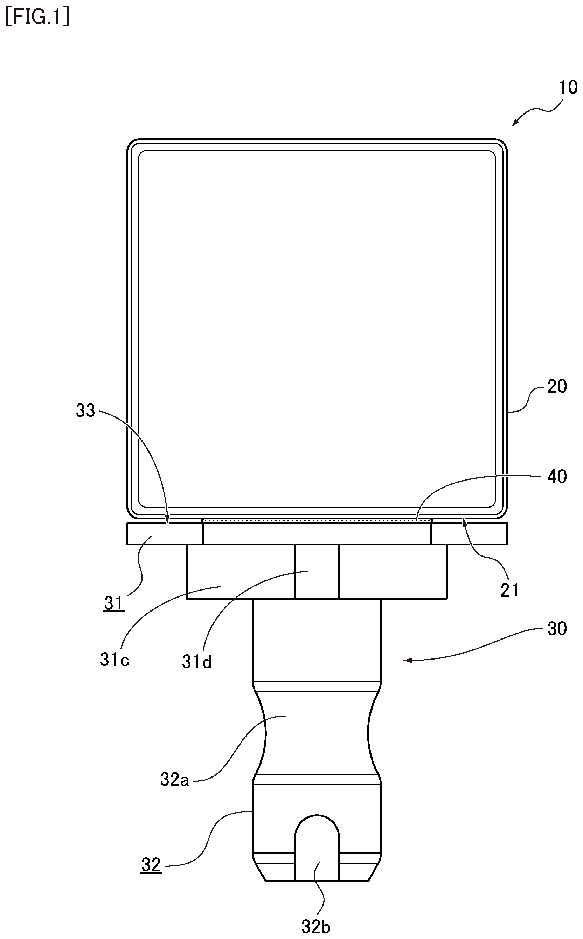

(First Embodiment) A mill blank assembly according to the first embodiment of the present disclosure will be described below with reference to FIGS. 1 to 4. The mill blank assembly according to the present embodiment is a "dental mill blank assembly" used for dental applications. The mill blank assembly according to the present embodiment is attached to, for example, a chuck of a known dental processing device, such as a CAD/CAM processing device. The mill blank assembly is cut into a dental prosthesis, such as a crown, bridge, inlay, veneer or implant, by using a cutting tool. The dental processing device is not limited to a CAD/CAM processing device, but may be any other processing device. The dental processing device may include, for example, a cutting device, a coloring device, a firing device, or a grinding device. The mill blank assembly of the present disclosure is not limited to dental applications, but may also be used for other applications.

As shown in FIG. 1, a mill blank assembly 10 according to the present embodiment includes a blank portion 20, a holding portion 30, and an adhesive layer 40. The blank portion 20 and the holding portion 30 include adhesion surfaces to be bonded to each other. More specifically, the blank portion 20 includes a first adhesion surface 21, and the holding portion 30 includes a second adhesion surface 33. The adhesive layer 40 is disposed between the first adhesion surface 21 and the second adhesion surface 33 to make the blank portion 20 and the holding portion 30 adhere to each other.

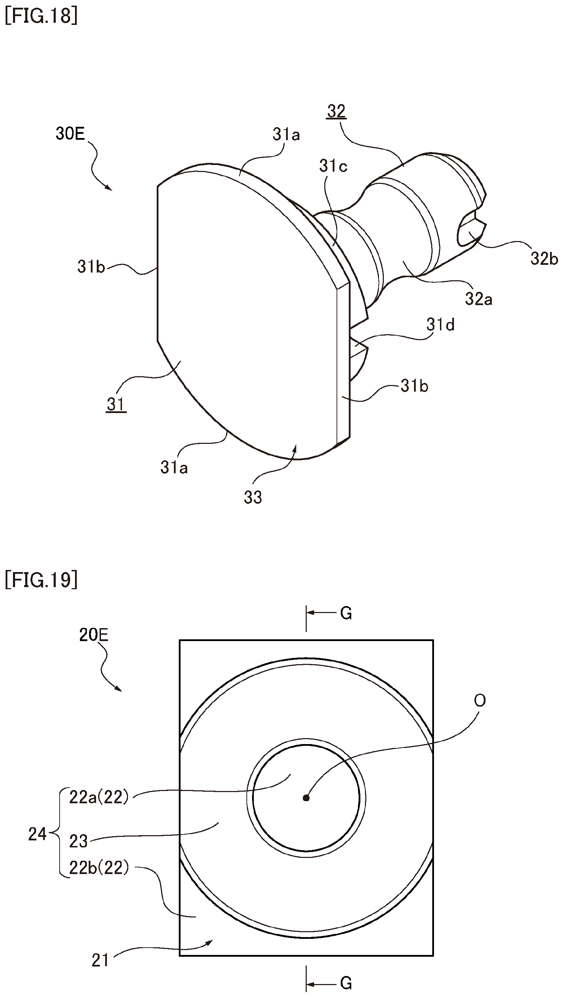

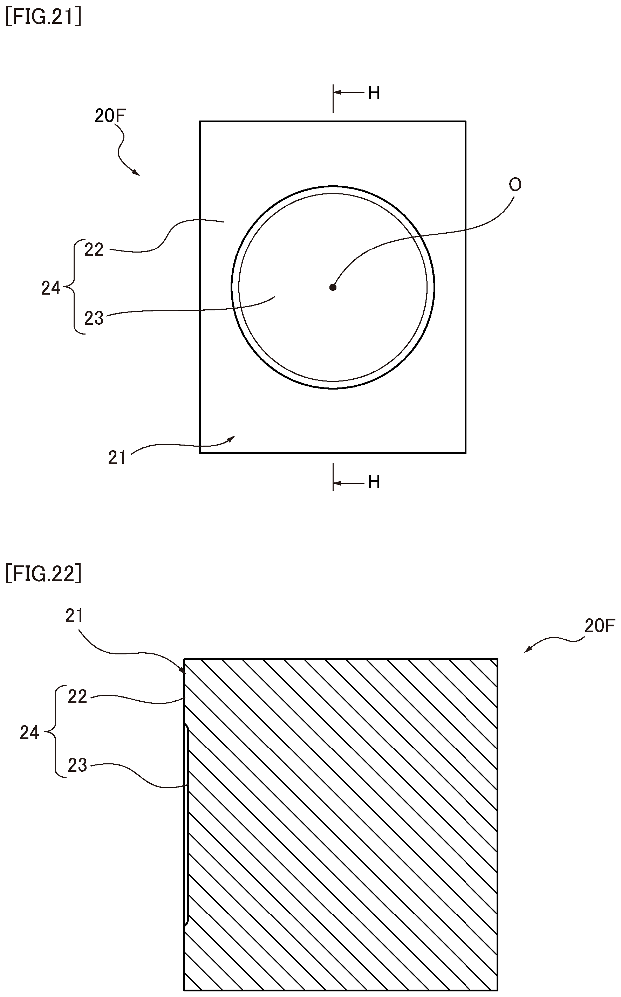

In the mill blank assembly 10 according to the present embodiment, the second adhesion surface 33 includes an uneven structure 36 including a projection portion 34 and a recess portion 35. The first adhesion surface 21 of the blank portion 20 is a flat surface. The uneven structure 36 is not limited to being provided only on the second adhesion surface 33, but can be provided only on the first adhesion surface 21 (e.g., sixth and seventh embodiments described later). It can also be provided on both the first and second adhesion surfaces 21 and 33. When the uneven structure 24 (see FIGS. 19 and 21) and the uneven structure 36 are provided on both the first and second adhesion surfaces 21 and 33, the uneven structure 24 including the projection portion 22 and the recess portion 23 on the first adhesion surface 21 of the blank portion 20 and the uneven structure 36 including the projection portion 34 and the recess portion 35 on the second adhesion surface 33 of the holding portion 30 do not fit each other.

The blank portion 20 is cut into a dental prosthesis, such as a crown, bridge, inlay, veneer or implant. The blank portion 20 of the first embodiment is a generally cubic-shaped block body. The blank portion 20 of the present disclosure is not limited to the shape of the first embodiment and may also be any other known shape. For example, the blank portion 20 may also be a generally rectangular-shaped block body that is elongated along the axial direction of a pillar portion 32 of the holding portion 30. Alternatively, the blank portion 20 may be a cylindrical block body.

The material of the blank portion 20 can be any dental material and is not particularly limited. For example, the blank portion 20 is preferably made of a material containing an oxide ceramic(s), or a composite material containing acrylic resin, polymer resin and an inorganic filler. The blank portion 20 is more preferably made of a material containing at least one selected from the group consisting of zirconia, alumina, and glass ceramics since such a material provides excellent biocompatibility, aesthetics, and strength. Furthermore, among these, the blank portion 20 is most preferably made of a material containing zirconia (more preferably zirconia calcined body) since it provides higher biocompatibility and strength as well as excellent aesthetics.

The blank portion 20 includes the first adhesion surface 21 to be attached to the holding portion 30. The first adhesion surface 21 of the present embodiment is a flat surface. Furthermore, the first adhesion surface 21 of the present embodiment may be flat, or may have a smooth or finely uneven surface. For example, the arithmetic mean roughness Ra of the first adhesion surface 21, as defined in JIS B0601:2013, may be 0.2 µm or less.

The Vickers hardness of the blank portion 20 is preferably 40 HV 5/30 or greater, more preferably 60 HV 5/30 or greater, still more preferably 65 HV 5/30 or greater, and most preferably 70 HV 5/30 or greater. The blank portion 20 with such Vickers hardness is suitable for processing with a CAD/CAM processing device and is preferable since it has a sufficient mechanical strength as a dental prosthesis.

In contrast, the upper limit of Vickers hardness is preferably 140 HV 5/30 or less, more preferably 135 HV 5/30 or less, still more preferably 130 HV 5/30 or less, and most preferably 125 HV 5/30 or less. The blank portion 20 with such Vickers hardness is suitable for processing with a CAD/CAM processing device and is preferable since it has a sufficient mechanical strength as a dental prosthesis. Vickers hardness is measured, for example, by the procedure described in examples explained later.

When the sample cracks or indentation loses its shape at HV 5/30, HV 1/10 may be substituted therefor. Even in this case, Vickers hardness of the blank portion 20 is preferably 40 HV 1/10 or greater, more preferably 60 HV 1/10 or greater, still more preferably 65 HV 1/10 or greater, most preferably 70 HV 1/10 or greater. The upper limit of Vickers hardness is preferably 140 HV 1/10 or less, more preferably 135 HV 1/10 or less, still more preferably 130 HV 1/10 or less, most preferably 125 HV 1/10 or less.

The blank portion 20 is preferably 10 to 100 MPa, more preferably 15 to 90 MPa, most preferably 20 to 80 MPa in three-point bending strength as measured in accordance with ISO 6872:2015. By adjusting three-point bending strength within such range, the blank portion 20 will have a reduced risk of fracture caused by temperature changes or vibration, good machinability and grindability when machined into a dental prosthesis, and high durability after machining, etc., thereby making it suitable for dental applications.

The holding portion 30 is a member that holds the blank portion 20, and can be attached to a chuck device of a dental processing apparatus while maintaining a state in which the blank portion 20 is held. The holding portion 30 includes a pedestal 31 and a pillar portion 32.

The material of the holding portion 30 is not particularly limited. However, from the viewpoints of strength, durability, cost, and formability, it is preferably made of a material containing at least one of metals such as aluminum and iron, and alloys such as aluminum alloys and iron alloys. Among these, the holding portion 30 is most preferably made of an aluminum alloy or an iron alloy from the viewpoint of suppressing thermal expansion and contraction. Using these materials, the pedestal 31 and the pillar portion 32 may be previously connected and manufactured as an integral body, or may be separately manufactured and then joined together by welding, an adhesive, or the like.

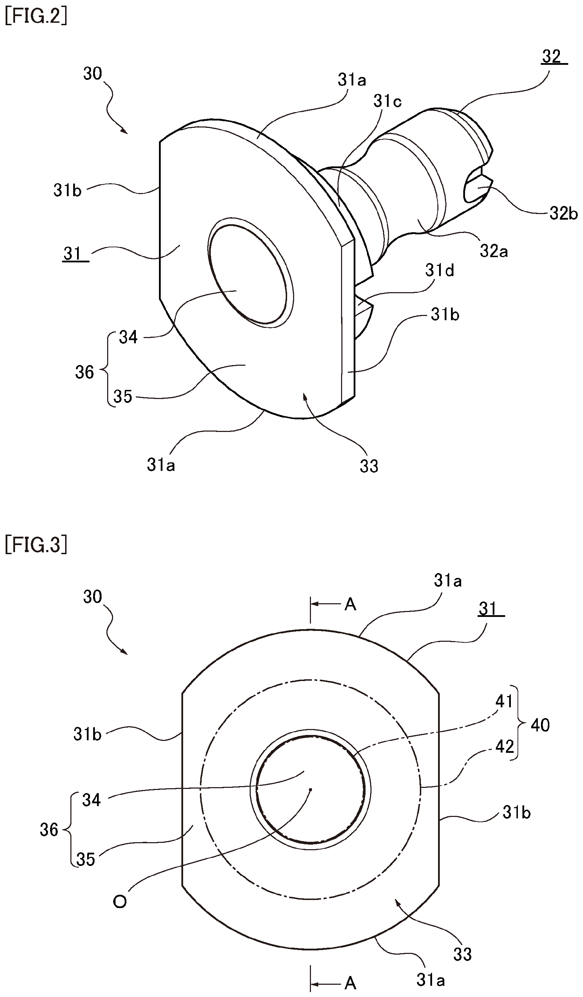

As shown in FIGS. 2 and 3, the pedestal 31 of the present embodiment is formed in a plate shape and has a generally oval shape obtained by cutting out both sides of a disk with two parallel straight lines, and includes a pair of arc edges 31a and a pair of parallel straight edges 31b. The pedestal 31 has, on one of its surfaces, the above-mentioned second adhesive surface 33 for being bonded to the blank portion 20. Thus, the second adhesive surface 33 of the present embodiment is surrounded by the pair of arc edges 31a and the pair of straight edges 31b, and is line-symmetrical with respect to line segments that pass through a center O of the arc edges 31a and that are perpendicular or parallel to the straight edges 31b. Furthermore, the second adhesive surface 33 of the present embodiment is also point-symmetrical around the center O as the center of symmetry. The center O is a point coinciding with the central axis of the pillar portion 32 and also with that of the mill blank assembly 10. The pedestal 31 has a generally cylindrical base portion 31c on the opposite side of the second adhesive surface 33, and a first notch 31d is provided on a side surface of the base portion 31c. The first notch 31d functions as a positioning portion for determining a direction in which the holding portion 30 is attached to the chuck device.

The second adhesion surface 33 has an uneven structure 36 including a circular projection 34 and an annular recess 35. The projection 34 and the recess 35 of the uneven structure 36 are configured not to fit with each other. In the present disclosure, the term "fit" refers not only to a close fit in which a projection and a recess engage with each other with almost no gap, but also to a loose fit in which they engage with each other with some clearance. Therefore, the expression "configured not to fit with each other" in the present disclosure means not only that the projection 34 and the recess 35 provided on the second adhesion surface 33 of the holding portion 30 do not closely fit with each other, but also that they do not loosely fit with each other. The scope of the "configuration not to fit with each other" also includes not only the case where the projection 34 and the recess 35 do not fit with each other, but also the case where the entire areas of the first adhesion surface 21 of the blank portion 20 and the second adhesion surface 33 of the holding portion 30 do not fit with each other. Furthermore, when both the first adhesion surface 21 of the blank portion 20 and the second adhesion surface 33 of the holding portion 30 are provided with uneven structures 24 and 36, respectively, the "configuration not to fit with each other" also includes a configuration in which the uneven structure 24 including the projection 22 and the recess 23 provided on the blank portion 20 (see the later-described sixth and seventh embodiments and FIGS. 19 and 21) and the uneven structure 36 including the projection 34 and the recess 35 provided on the second adhesion surface 33 of the holding portion 30 do not fit with each other.

To achieve such a configuration, in the uneven structure 36 of the present embodiment, as shown in FIG. 3, the projection 34 is provided at the center of the second adhesion surface 33 so that its center coincides with the center O of the arc edges 31a, and it projects in a cylindrical or truncated conical shape in a direction opposite to the pillar portion 32. The recess 35 is provided on the outer circumference (radially outside) of the projection 34 of the second adhesion surface 33, and has a shape formed by partially cutting out both sides of a ring formed between the outer circumferential surface of the projection 34 and the pair of arc edges 31a by the pair of straight edges 31b. Therefore, the projection 34 and the recess 35 of the uneven structure 36 of the present embodiment are concentric in plan view. The uneven structure 36 is not limited to a circular or annular shape, but may be oval, elliptical, or polygonal. However, a circular or annular shape is preferable, and it is more preferable to form the structure concentrically with the center O as the center. This provides more uniform transmission of stress from the holding portion 30 to the blank portion 20, thereby more appropriately reducing the risk of fracture of the blank portion 20.

The uneven structure 36 of the present disclosure is configured by an unevenness including a height or depth that is capable of providing the adhesive layer 40 of a predetermined thickness between the first and second adhesion surfaces 21, 33. Thus, the uneven structure 36 of the present disclosure does not include a fine unevenness (for example, the height and/or depth is less than 10 µm) that is formed by subjecting the first and/or second adhesion surface 21, 33 to grinding, etc.

In more detail, the height of the projection 34 or the depth of the recess 35 of the uneven structure 36 is preferably from 80 µm to 400 µm, more preferably from 90 µm to 380 µm, still more preferably from 100 µm to 350 µm, even more preferably from 110 µm to 250 µm, particularly preferably from 130 µm to 240 µm, and most preferably from 140 µm to 230 µm. In the mill blank assembly 10 of the present embodiment shown in FIGS. 1 to 4, the height of the projection 34 and the depth of the recess 35 are the same. This configuration allows an adhesive layer 40 having a predetermined thickness to be provided between the first and second adhesion surfaces 21 and 33. Accordingly, the adhesive layer 40 can ensure appropriate adhesive strength between the blank portion 20 and the holding portion 30. The step shape of the uneven structure 36 is not particularly limited, and may be vertical, rectangular, tapered, or R-shaped. The height of the projection or the depth of the recess is measured, for example, by the procedure described in the later-described examples.

The surfaces of the projection 34 and the recess 35 of the second adhesion surface 33 may have an arithmetic mean roughness Ra of 0.2 µm or less, but may also be provided with fine unevenness, that is, a so-called rough surface. The first adhesion surface 21 may also be provided with such fine unevenness, that is, a rough surface. By providing such fine unevenness, each compressive shear adhesive strength between the first and second adhesion surfaces 21 and 33 and the adhesive layer 40 can be increased. Such fine unevenness does not affect the functional effects of the uneven structure 36 provided on the second adhesion surface 33.

The pillar portion 32, which projects in a cylindrical or truncated conical shape, is provided on the base portion 31c located on the surface opposite to the second adhesion surface 33 of the pedestal 31. As mentioned above, the center O of the arc edges 31a, the projection 34, and the recess 35 of the pedestal 31 is positioned on the central axis of the pillar portion 32. In other words, the pillar portion 32 is formed in a concentric shape (concentric circular shape) with the projection 34 and other components of the pedestal 31 in plan view.

The pillar portion 32 is narrowed at its general center to curve inward, and this narrowed portion serves as a chuck portion 32a. This chuck portion 32a is brought into engagement with a fixture provided in the chuck of the dental processing device, so that the pillar portion 32 is fixed to the chuck. The pillar portion 32 is provided, at its tip end on a side opposite to the side fixed to the pedestal 31, with a second notch 32b. The second notch 32b also serves as a positioning portion, etc. for determining a direction in which the holding portion 30 is attached to the chuck.

The side surface shape of the cylindrical base portion 31c including the first notch 31d, as shown in FIG. 1 and the like, may be a vertical cylindrical shape, a truncated conical shape with a tapered inclination, or a shape having a curved surface such as an R shape. For example, in the case of a vertical cylindrical shape, in a CAD/CAM processing machine of the CEREC system manufactured by Dentsply Sirona Inc., the base portion 31c functions as a touch sensor for confirming the initial position of a processing bar by bringing the bar into contact with the side surface of the base portion 31c immediately before processing.

As mentioned above, the adhesive layer 40 is disposed between the first and second adhesion surfaces 21, 33 as respective adhesion surfaces of the blank portion 20 and holding portion 30 to make the blank portion 20 and the holding portion 30 adhere to each other.

The adhesive layer 40 is formed by applying (e.g., dropping) an adhesive composition (also referred to as "adhesive") between the first and second adhesion surfaces 21 and 33, followed by curing thereof. For example, after the adhesive composition is applied to the center of the second adhesion surface 33 (in the present embodiment, the surface of the projection 34 shown in FIG. 3) or to the center of the first adhesion surface 21, the first adhesion surface 21 of the blank portion 20 is pressed against the second adhesion surface 33. Thereafter, the assembly is left to stand at room temperature (e.g., 20 °C), whereby the adhesive is cured to form the adhesive layer 40, and the blank portion 20 and the holding portion 30 are bonded together. The adhesive composition is preferably applied to the center of the second adhesion surface 33, but it need not be applied strictly at the center; application approximately at the center is sufficient.

The adhesive composition is not particularly limited, and known adhesives can be used. Examples of suitable adhesives include epoxy adhesives, epoxy-modified silicone adhesives, cyanoacrylate adhesives, (meth)acrylate adhesives, and urethane adhesives. Among these, epoxy adhesives, epoxy-modified silicone adhesives, and cyanoacrylate adhesives are more preferable. Examples of the epoxy adhesives include "Bond Quick 30" manufactured by KONISHI Co., Ltd. Examples of the epoxy-modified silicone adhesives include "EP001N" manufactured by CEMEDINE Co., Ltd. Examples of the cyanoacrylate adhesives include "Aron Alpha Extra 4000" manufactured by TOAGOSEI Co., Ltd. These adhesive compositions have appropriate viscosity and quick-drying properties, thereby suppressing unintended diffusion, providing an appropriate degree of impregnation into the blank portion 20, and enabling the formation of an adhesive layer 40 having an appropriate thickness and area.

The thickness of the adhesive layer 40 is not particularly limited, but is preferably from 3 µm to 450 µm, more preferably from 5 µm to 360 µm, and most preferably from 8 µm to 260 µm. The thickness of the adhesive layer 40 refers to that of the thickest portion. When the first adhesion surface 21 having a flat surface is bonded to the second adhesion surface 33 having the uneven structure 36, the adhesive layer 40 (hereinafter referred to as the "first adhesive layer 41") provided between the first adhesion surface 21 and the surface of the projection 34 and the adhesive layer 40 (hereinafter referred to as the "second adhesive layer 42") provided between the first adhesion surface 21 and the recess 35 have different thicknesses. The thickness of the adhesive layer 40 is measured, for example, by the procedure described in the later-described examples.

Accordingly, in more detail, the thickness of the first adhesive layer 41 at the projection 34 is preferably from 3 µm to 50 µm, more preferably from 5 µm to 40 µm, and most preferably from 8 µm to 20 µm. In contrast, the thickness of the second adhesive layer 42 at the recess 35 is preferably from 80 µm to 400 µm, more preferably from 100 µm to 360 µm, and most preferably from 110 µm to 260 µm. In other words, from the viewpoint of making it difficult to transmit thermal expansion or contraction of the holding portion 30 to the blank portion 20, it is preferable that the first and second adhesive layers 41 and 42 be thicker, thereby reducing the risk of fracture caused by temperature variation or vibration, particularly the risk of fracture at low temperatures. The thicknesses of the first and second adhesive layers 41 and 42 refer to the thicknesses of their thickest portions. However, if the adhesive layer 40 is excessively thick, cracks or fine fractures may occur within the adhesive layer 40 before the blank portion 20 breaks. As a result, the peel adhesion strength (later-described N1 and N2) decreases, making it difficult to maintain appropriate adhesive strength between the blank portion 20 and the holding portion 30. Accordingly, this is not preferable.

A greater difference in thickness (hereinafter referred to as "step") within the first adhesion surface 21 between the first and second adhesive layers 41 and 42 is preferable, since it relieves stress caused by expansion or contraction of the holding portion 30 and makes it more difficult for such stress to be transmitted to the blank portion 20, thereby reducing the risk of fracture of the blank portion 20. On the other hand, in the first embodiment, a smaller step is preferable for fixing the blank portion 20 by the holding portion 30. A smaller step is also preferable from the viewpoint of reducing the amount of adhesive used. The step is preferably from 70 µm to 400 µm, more preferably from 90 µm to 350 µm, and still more preferably from 100 µm to 250 µm. The shape of the step is not particularly limited, and may be vertical, rectangular, tapered, or R-shaped. The thickness of the adhesive layer 40 is measured, for example, by the following procedure.

By setting the thicknesses of the first and second adhesive layers 41 and 42 and the step therebetween within the above-described ranges, it is possible to maintain the appropriate adhesive strength required for properly bonding and fixing the blank portion 20 and the holding portion 30, while reducing the risk of fracture of the blank portion 20.

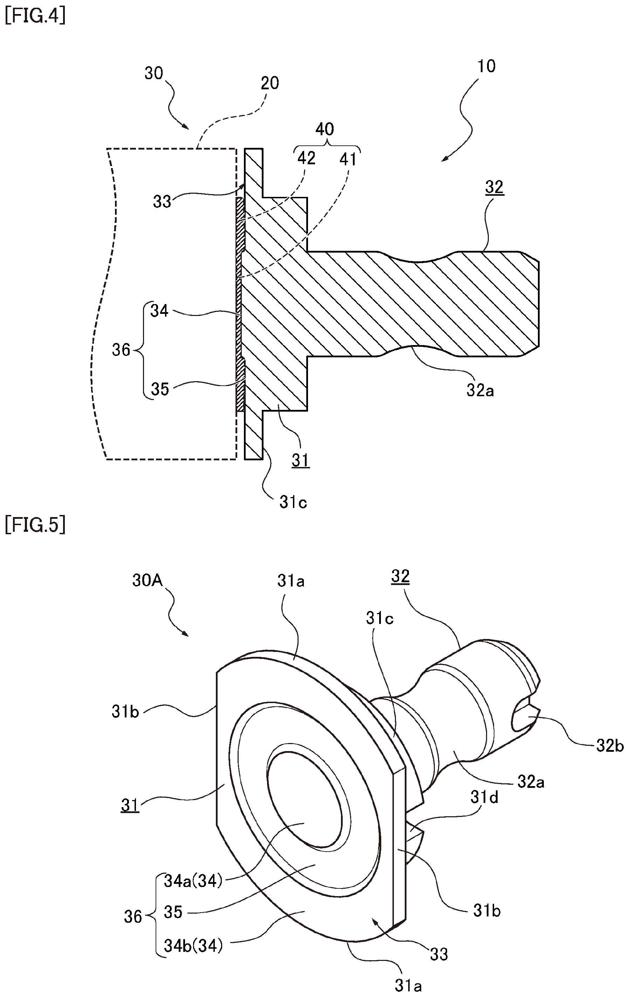

The shape and area of the adhesive layer 40 in plan view are preferably as described below. However, it is sufficient that the first and second adhesion surfaces 21 and 33 are bonded with appropriate adhesive strength, and the adhesive layer 40 is not limited to the following shape and area. In FIGS. 3 and 4, the first and second adhesive layers 41 and 42 are shown by dashed lines. As shown in these drawings, the adhesive layer 40 is preferably generally circular in plan view and concentric with the projection 34. When the adhesive layer 40 is eccentric with respect to the projection 34, an unbonded area between the blank portion 20 and the holding portion 30 via the adhesive layer 40 becomes closer to the center. This makes it difficult for the holding portion 30 to stably support the blank portion 20 over its entire surface, and the processing accuracy may decrease and/or the machining may become difficult. Accordingly, this is not preferable.

The first adhesive layer 41 has substantially the same area as the projection 34 of the second adhesion surface 33, and the second adhesive layer 42 can fill a part or the entirety of the recess 35 of the second adhesion surface 33. To relieve stress caused by thermal expansion or contraction of the holding portion 30, it is preferable that the outer peripheral edge of the second adhesive layer 42 is positioned inside the outer peripheral edge of the recess 35, so that its area is smaller than that of the recess 35. This configuration makes it more difficult for thermal expansion or contraction of the holding portion 30 to be transmitted to the blank portion 20, thereby reducing the risk of fracture. In other words, it is preferable that the first and second adhesion surfaces 21 and 33 are not bonded to each other in the vicinity of the outer peripheral edge of the second adhesion surface 33. On the other hand, from the viewpoint of increasing the adhesion strength (also referred to as "peel adhesion strength") between the holding portion 30 and the blank portion 20, it is preferable that the second adhesive layer 42 fills the entire recess 35 of the second adhesion surface 33, since this increases the adhesive strength.

With this configuration, the mill blank assembly 10 of the present embodiment maintains an appropriate adhesive strength between the blank portion 20 and the holding portion 30 by the adhesive layer 40, and suppresses the influence of internal stress caused by a difference in thermal contraction or expansion between the blank portion 20 and the holding portion 30, thereby further reducing the risk of fracture of the blank portion 20.

The applied amount of the adhesive composition is not particularly limited, but is preferably from 0.004 ml to 0.040 ml. Within this range, the adhesive layer 40 having the above-described appropriate thickness and area can be obtained, and the above-described excellent effects can be achieved.

Furthermore, it is preferable that the areas of the first adhesion surface 21, the second adhesion surface 33, and the adhesive layer 40 have the following relationships. In the following description, the area of the first adhesion surface 21 (that is, the area in plan view of one surface of the blank portion 20 on which the first adhesion surface 21 is provided) is referred to as S1. The total area of the second adhesion surface 33 (that is, the area in plan view of the pedestal 31 excluding the area in the height or depth direction of the uneven structure 36) is referred to as S2. The contact area between the adhesive layer 40 (the first adhesive layer 41) on the projection 34 (projection 22 in the later-described seventh embodiment) of the uneven structure 36 and the first adhesion surface 21 of the blank portion 20 is referred to as S3. The contact area between the adhesive layer 40 (the second adhesive layer 42) on the recess 35 (recess 23 in the later-described seventh embodiment) and the first adhesion surface 21 is referred to as S4. The total contact area between the first adhesion surface 21 of the blank portion 20 and the adhesive layer 40 is referred to as S5. The respective areas represented by S1 to S5 are expressed in mm².

The total area S1 of the first adhesion surface 21 is preferably from 120 mm² to 900 mm², more preferably from 170 mm² to 500 mm², still more preferably from 220 mm² to 400 mm², particularly preferably from 290 mm² to 350 mm², and most preferably from 294 mm² to 342 mm², so that the blank portion 20 can have a size suitable for producing a dental prosthesis. The total area S2 of the second adhesion surface 33 is preferably from 110 mm² to 800 mm², more preferably from 150 mm² to 450 mm², still more preferably from 180 mm² to 300 mm², particularly preferably from 200 mm² to 270 mm², and most preferably from 216 mm² to 263 mm². By setting the total area S1 of the first adhesion surface 21 within this range, the mill blank assembly 10 maintains appropriate adhesive strength between the blank portion 20 and the holding portion 30 by means of the adhesive layer 40, suppresses the influence of internal stress caused by a difference in thermal contraction or expansion between the blank portion 20 and the holding portion 30, and improves vibration resistance.

The contact area S3 between the adhesive layer 40 (first adhesive layer 41) on the projection 34 and the first adhesion surface 21 of the blank portion 20 is preferably from 0 mm² to 135 mm², more preferably from 0 mm² to 100 mm², and still more preferably from 0 mm² to 85 mm². At this time, when the projection 34 is provided at the center of the second adhesion surface 33, as in the first embodiment and the later-described second to fourth and sixth embodiments, the contact area S3 is preferably from 15 mm² to 135 mm², more preferably from 20 mm² to 100 mm², and still more preferably from 25 mm² to 85 mm². In contrast, when the projection 34 is not provided at the center of the second adhesion surface 33, but is provided on the outer peripheral side of the recess 35, as in the later-described fifth embodiment, it is preferable that the contact area S3 is 0 mm², that is, no adhesive composition is applied onto the projection 34. The contact area S4 between the adhesive layer 40 (second adhesive layer 42) on the recess 35 and the first adhesion surface 21 is preferably from 0 mm² to 600 mm², more preferably from 20 mm² to 350 mm², still more preferably from 35 mm² to 300 mm², particularly preferably from 50 mm² to 250 mm², and most preferably from 80 mm² to 200 mm².

By adjusting the contact areas S3 and S4 within the above-mentioned ranges and ratios, the mill blank assembly 10 of the present embodiment maintains an appropriate adhesion strength between the blank portion 20 and the holding portion 30 by the adhesive layer 40, suppresses the influence of internal stress caused by the difference in thermal contraction or expansion between the blank portion 20 and the holding portion 30, and improves vibration resistance.

The total contact area S5 between the first adhesion surface 21 and the adhesive layer 40 is preferably from 10 mm² to 680 mm², more preferably from 15 mm² to 400 mm², still more preferably from 18 mm² to 300 mm², particularly preferably from 20 mm² to 230 mm², and most preferably from 27 mm² to 223 mm². By setting it within this range as well, the mill blank assembly 10 of the present embodiment maintains an appropriate adhesion strength between the blank portion 20 and the holding portion 30 by means of the adhesive layer 40, suppresses the influence of internal stress caused by the difference in thermal contraction or expansion between the blank portion 20 and the holding portion 30, and improves vibration resistance.

It is preferable that the ratios of the respective areas are within the following ranges. In the present specification, the ratio (B/A) means the value of B/A × 100 (%). More specifically, the ratio of the area B to the area A is expressed as B/A × 100 (%). The ratio (S5/S1) of the total contact area S5 between the first adhesion surface 21 of the blank portion 20 and the adhesive layer 40 to the total area S1 of the first adhesion surface 21 of the blank portion 20 is preferably from 8.0 % to 75.0 %, and more preferably from 9.0 % to 65.0 %. The ratio (S5/S2) of the total contact area S5 to the total area S2 of the second adhesion surface 33 is preferably from 10.0 % to 90.0 %, and more preferably from 13.0 % to 85.0 %. By setting these ratios within the above ranges, the mill blank assembly 10 of the present embodiment maintains an appropriate adhesive strength between the blank portion 20 and the holding portion 30 by means of the adhesive layer 40, suppresses the influence of internal stress caused by a difference in thermal contraction or expansion between the blank portion 20 and the holding portion 30, and improves vibration resistance.

Furthermore, when the projection 34 is provided at the center, the ratio S3/S1 is preferably from 4.5 % to 40.0 %, more preferably from 7.0 % to 35.0 %, and still more preferably from 8.5 % to 30.0 %. When the projection 34 is not provided at the center, the ratio S3/S1 is preferably 0.0 %. The ratio S4/S1 is preferably from 0.0 % to 65.0 %, and more preferably from 0.0 % to 57.0 %. When the projection 34 is provided at the center, the ratio S3/S2 is preferably from 7.5 % to 55.0 %, more preferably from 9.0 % to 45.0 %, and still more preferably from 10.0 % to 40.0 %. When the projection 34 is not provided at the center, the ratio S3/S2 is preferably 0.0 %. The ratio S4/S2 is preferably from 0.0 % to 60.0 %, and more preferably from 0.0 % to 52.0 %. By setting each ratio within these ranges, the mill blank assembly 10 of the present embodiment maintains an appropriate adhesive strength between the blank portion 20 and the holding portion 30 by means of the adhesive layer 40, suppresses the influence of internal stress caused by a difference in thermal contraction or expansion between the blank portion 20 and the holding portion 30, and improves vibration resistance.

In this case, from the viewpoint of making it difficult to transmit thermal contraction of the holding portion 30 to the blank portion 20, the ratio S3/S2 is preferably a smaller value, for example, less than or equal to 37.0 %. The ratio S4/S2 is preferably a larger value, for example, greater than or equal to 24.0 %. As a result, the mill blank assembly 10 of the present embodiment can reduce the risk of fracture caused by temperature change or vibration, particularly the risk of fracture at low temperatures.

From the viewpoint of adhesive contact area, the ratios S3/S1 and S4/S1 are preferably larger values (for example, S3/S1 ≥ 7.9 %, and S4/S1 ≥ 16.0 %). In particular, since the adhesive composition is impregnated into the blank portion 20 to form a resin-impregnated layer, the ratio S3/S1 is preferably a larger value. This resin-impregnated layer serves as an anchor and appropriately maintains the adhesive strength between the blank portion 20 and the adhesive layer 40, and can suppress peeling of the surface of the blank portion 20 even when the blank portion 20 is peeled from the holding portion 30.

The second adhesive layer 42 fills a gap at the recess portion 35 of the second adhesion surface 33 and relieves stress caused by expansion or contraction of the holding portion 30, thereby making it difficult to transmit the stress to the blank portion 20. This can reduce the risk of fracture of the blank portion 20. Therefore, the ratio S4/S1 is preferably a larger value.

In the mill blank assembly 10 of the present embodiment, the peel adhesion strength N1 between the first adhesion surface 21 of the blank portion 20 and the second adhesion surface 33 of the holding portion 30, after the blank portion 20 and the holding portion 30 are bonded and then allowed to stand at 20 °C for 24 hours, is preferably 100 N or greater, more preferably 200 N or greater, and still more preferably 250 N or greater. The peel adhesion strength is measured, for example, by the procedure described in the later-described examples.

In the mill blank assembly 10 of the present embodiment, the peel adhesion strength N2 between the first adhesion surface 21 of the blank portion 20 and the second adhesion surface 33 of the holding portion 30, after being stored at -30 °C for 24 hours and subsequent standing at room temperature (for example, 20 °C) for 24 hours, is preferably 100 N or greater, more preferably 200 N or greater, still more preferably 250 N or greater, and most preferably 300 N or greater. As a result, the mill blank assembly 10 of the present embodiment can further reduce the risk of fracture of the blank portion 20 when peeling occurs between the blank portion 20 and the holding portion 30 that have been bonded together by the adhesive layer 40.

The ratio of the peel adhesion strength N2 to the peel adhesion strength N1, that is, N2/N1 × 100 (%), is preferably 70 % or greater, more preferably 80 % or greater, still more preferably 90 % or greater, and most preferably 100 % or greater. By setting the ratio N2/N1 within this range, the mill blank assembly 10 can more appropriately reduce the risk of fracture of the blank portion 20, particularly in cold environments. The peel adhesion strength is measured, for example, by the procedure described below.

As explained above, the mill blank assembly 10 of the first embodiment maintains an adhesion strength necessary for appropriately bonding the blank portion 20 and the holding portion 30 and can further reduce the risk of fracture of the blank portion 20 due to the temperature change or vibration. In particular, the mill blank assembly 10 of the first embodiment can reduce the risk of fracture of the blank portion 20 under extreme cold environments or vibration during transportation. Furthermore, the mill blank assembly 10 of the first embodiment relieves vibration during product transportation and thus can reduce the amount of cushioning material used in product packaging, thereby reducing environmental load and minimizing product boxes.

### (Second Embodiment)

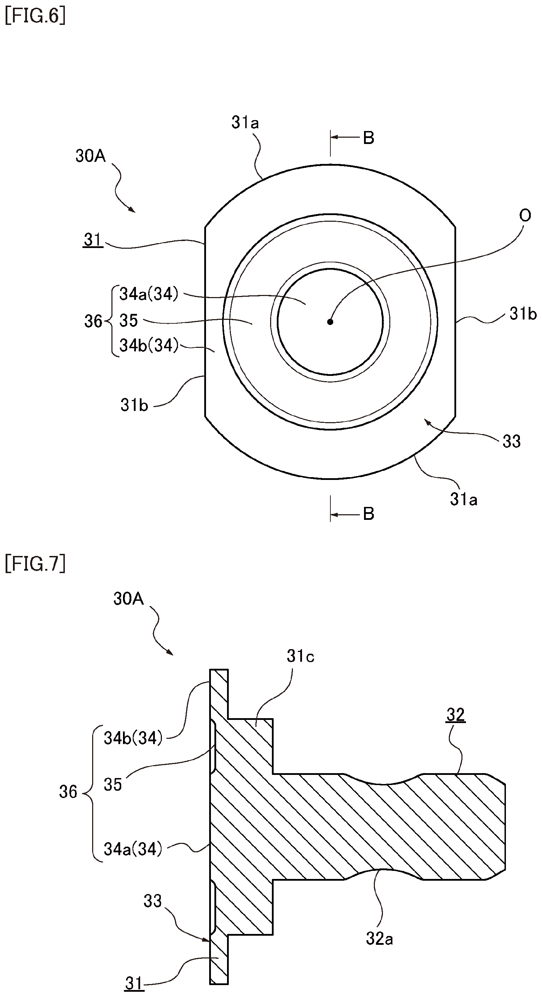

A mill blank assembly 10 according to the second embodiment of the present disclosure is described below with reference to FIGS. 5 to 7. The mill blank assembly 10 according to the second embodiment has the same basic configuration as the mill blank assembly 10 according to the first embodiment, except that the configuration of the uneven structure 36 is different. Therefore, in the description of the second embodiment and the subsequent descriptions of the third to seventh embodiments, the same configurations as those of the first embodiment are denoted by the same reference numerals, and detailed explanations thereof are omitted. Configurations different from those of the first embodiment are mainly described.

The mill blank assembly 10 according to the second embodiment includes the blank portion 20 (see FIG. 1, etc.), a holding portion 30A (see FIGS. 5 to 7), and the adhesive layer 40 (see FIG. 1, etc.). The configurations of the blank portion 20 and the adhesive layer 40 are similar to those of the first embodiment shown in FIG. 1, etc.

As shown in FIGS. 5 to 7, the holding portion 30A of the second embodiment includes a pedestal 31 in a flat plate shape, which includes a pair of arc edges 31a and a pair of straight edges 31b, and a cylindrical pillar portion 32. Similar to the pedestal 31 of the first embodiment, that of the second embodiment is line symmetric and point symmetric.

In the second embodiment, the uneven structure 36 provided on the second adhesion surface 33 includes a circular projection portion (hereinafter referred to as "first projection portion 34a") provided in the center of the second adhesion surface 33, an annular recess portion (hereinafter simply referred to as "recess portion 35") provided on the outer circumference of the first projection portion 34a, and an annular projection portion (hereinafter referred to as "second projection portion 34b") provided on the outer circumference of the recess portion 35. The recess portion 35 and the second projection portion 34b are provided in a concentric circular shape with the first projection portion 34a.

When the second adhesion surface 33 with such configuration and the first adhesion surface 21 are bonded together, it is preferable that the adhesive layer 40 is formed on the top surface of the first projection portion 34a and in the recess portion 35, but not on the top surface of the second projection portion 34b. With this, it is possible to appropriately prevent internal stress, which is due to thermal contraction or expansion of the holding portion 30, from transmitting to the blank portion 20.

The mill blank assembly 10 of the second embodiment having the above configuration also exhibits the same effects as those of the mill blank assembly 10 of the first embodiment. Furthermore, the mill blank assembly 10 of the second embodiment is improved in supporting stability, because the first projection portion 34a supports a central portion of the first adhesion surface 21 of the blank portion 20, the second projection portion 34b provided on the outer circumference supports the vicinity of the outer periphery of the first adhesion surface 21, and the support area is also increased. Furthermore, the adhesive layer 40 (second adhesive layer 42, see FIG. 3, etc.) having a suitable thickness is formed between the bottom surface of the recess portion 35 and the first adhesion surface 21. The second adhesive layer 42 preferably has a greater thickness than the first adhesive layer 41, and stress due to a difference in linear expansion between the holding portion 30 and the blank portion 20 can be relieved in the portion of the second adhesive layer 42. As a result, the mill blank assembly 10 of the second embodiment can more appropriately reduce the risk of fracture of the blank portion 20 due to temperature changes or vibration, particularly under cold environments. Furthermore, since the second projection portion 34b provides the holding portion 30 with a larger support area, the stability of supporting the blank portion 20 by the holding portion 30 is further improved.

### (Third Embodiment)

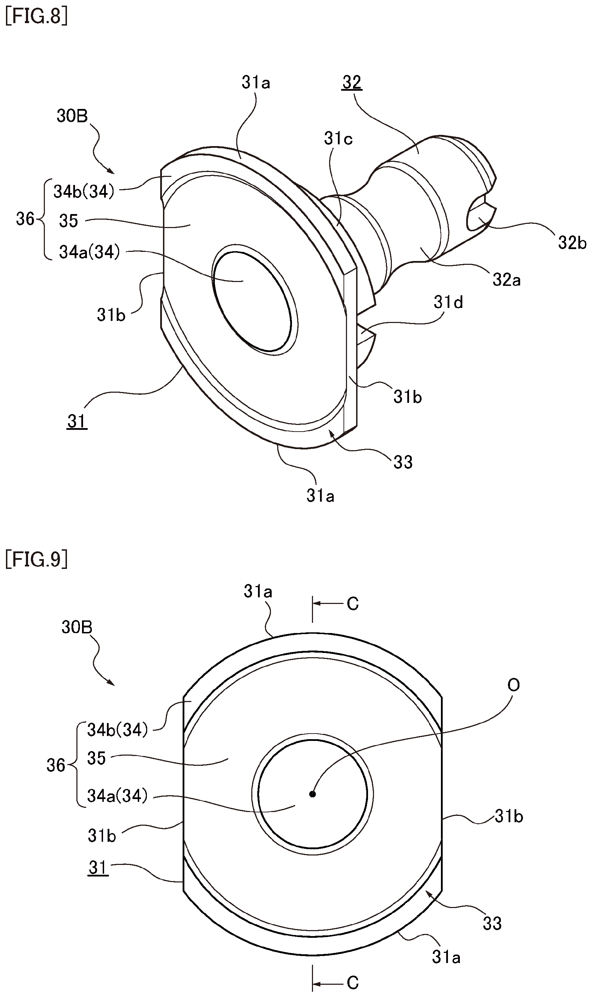

A mill blank assembly 10 according to the third embodiment of the present disclosure is described below with reference to FIGS. 8 to 10. The mill blank assembly 10 according to the third embodiment has the same basic configuration as the mill blank assembly 10 according to the second embodiment shown in FIG. 5, etc., except that the areas of the recess portion 35 and the second projection portion 34b provided on the second adhesion surface 33 of the holding portion 30B are different. More specifically, the second projection portion 34b of the third embodiment has a narrower radial width of the annular portion and a smaller surface area because both sides of the ring are cut off, as compared with the second projection portion 34b of the second embodiment. The recess portion 35 of the third embodiment has a larger surface area due to a wider width of the annular portion as compared with the recess portion 35 of the second embodiment.

The mill blank assembly 10 of the third embodiment of the above configuration also has the same effect as that of the second embodiment. Furthermore, in the mill blank assembly 10 of the third embodiment, the recess portion 35 has a larger area, and the inner edge of the second projection portion 34b is positioned more outwardly than that of the second embodiment, thereby more appropriately reducing the formation of the adhesive layer 40 on the top surface of the second projection portion 34b at the adhesion. In addition, the area of the recess portion 35 is large, allowing the second adhesive layer 42 to be wide, thereby increasing the adhesive strength between the holding portion 30B and the blank portion 20. As a result, the mill blank assembly 10 of the third embodiment can more appropriately reduce the risk of fracture of the blank portion 20 due to temperature changes and vibration, particularly under cold environments. The first and second projection portions 34a, 34b of this third embodiment, the above second embodiment and the later-mentioned fourth and eighth embodiments are formed at the same height, and their respective top surfaces are disposed on the same plane, so-called being flush with each other, but are not limited to this configuration. The first and second projection portions 34a, 34b can be formed at different heights. It is possible to increase the adhesion area of the adhesive layer 40, for example, by making the height of the first projection portion 34a higher than that of the second projection portion 34b, thereby further improving the peel adhesion strength of the adhesive layer 40.

### (Fourth Embodiment)

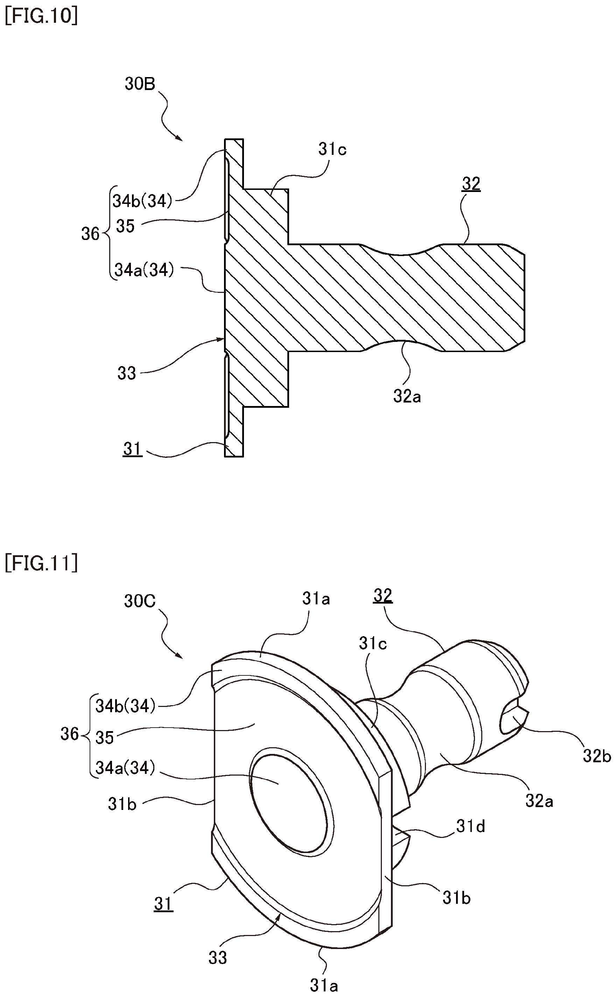

A mill blank assembly 10 according to the fourth embodiment of the present disclosure is described below with reference to FIGS. 11 to 14. The mill blank assembly 10 according to the fourth embodiment has the same basic configuration as the mill blank assembly 10 according to the third embodiment shown in FIG. 8, etc., except that both sides of the pedestal 31 of the holding portion 30C are cut out by two parallel straight lines, and one side is cut out in a larger area linearly than the other side, so that the straight edge 31b on one side is longer than that on the other side. Thus, the distances from the center O to the pair of straight edges 31b and their respective lengths are different.

The pedestal 31 of the holding portion 30C of the fourth embodiment includes the first projection portion 34a provided on the second adhesion surface 33, the recess portion 35 provided on the outer circumference of the first projection portion 34a, and the second projection portion 34b provided on the outer circumference of the recess portion 35. The first projection portion 34a, the recess portion 35, the second projection portion 34b, and the pair of arc edges 31a are formed in a concentric circular shape with the center O on the axis of the pillar portion 32 as the center thereof.

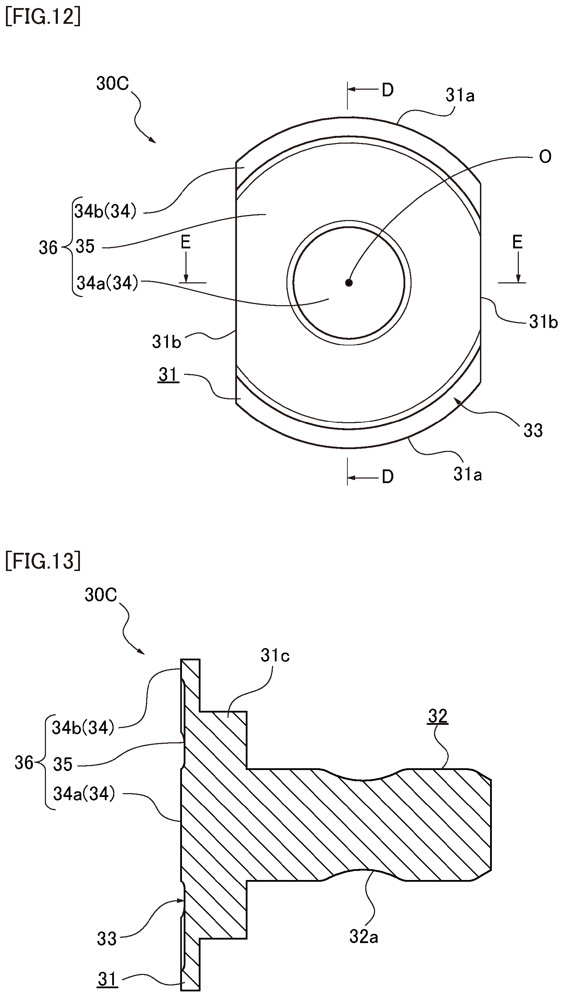

Here, in the fourth embodiment, the pair of straight edges 31b of the pedestal 31 is configured as above. Thus, as understood from FIGS. 12, etc., when the line D-D passing through the center O and parallel with the straight edges 31b is assumed to be an axis of symmetry, the pedestal 31 and even the second adhesion surface 33 have asymmetric shapes. In contrast, as understood from FIGS. 12, etc., when the line E-E passing through the center O and perpendicular to the straight edges 31b is assumed to be an axis of symmetry, the pedestal 31 and the second adhesion surface 33 are in a line symmetrical shape.

Therefore, the first projection portion 34a is provided at a position (near the center) away from the center (center of gravity) of the pedestal 31 in a direction toward the pair of straight edges 31b (in the width direction parallel with the line E-E). In contrast, the first projection portion 34a is provided at the center of the pedestal 31 in a direction toward the pair of arc edges 31a (in the longitudinal direction parallel with the line D-D).

The mill blank assembly 10 of the fourth embodiment of the above configuration also has the same effect as those of the mill blank assemblies 10 of the first and third embodiments. Furthermore, in the mill blank assembly 10 of the fourth embodiment, the pedestal 31 has an asymmetric shape, and the side of one straight edge 31b is more largely cut out. As a result, when the mill blank assembly 10 has been attached to the chuck of the processing device, the side of the straight edge 31b of the pedestal 31, which has been more largely cut out, does not project from the chuck device, allowing a smooth processing operation, etc.

### (Fifth Embodiment)

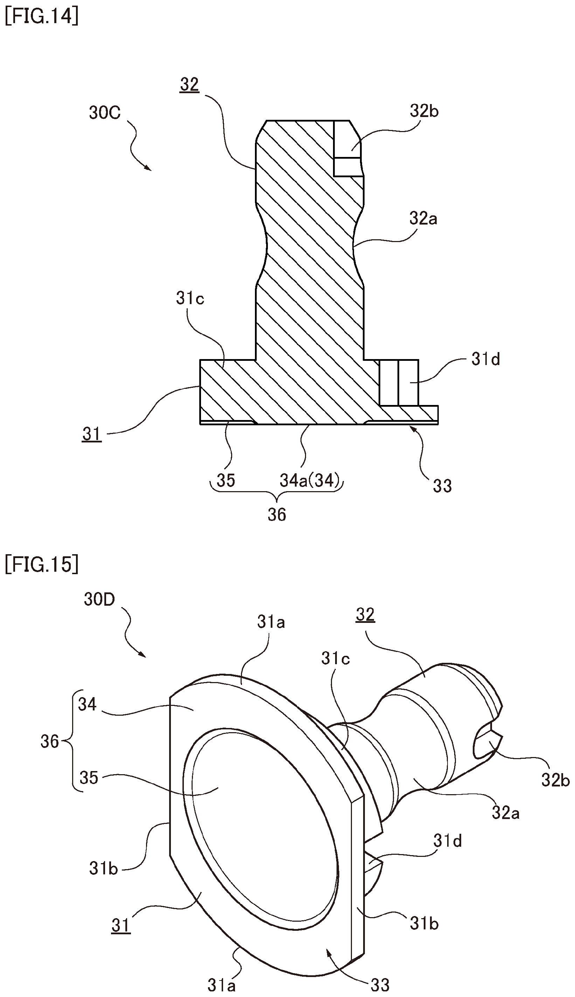

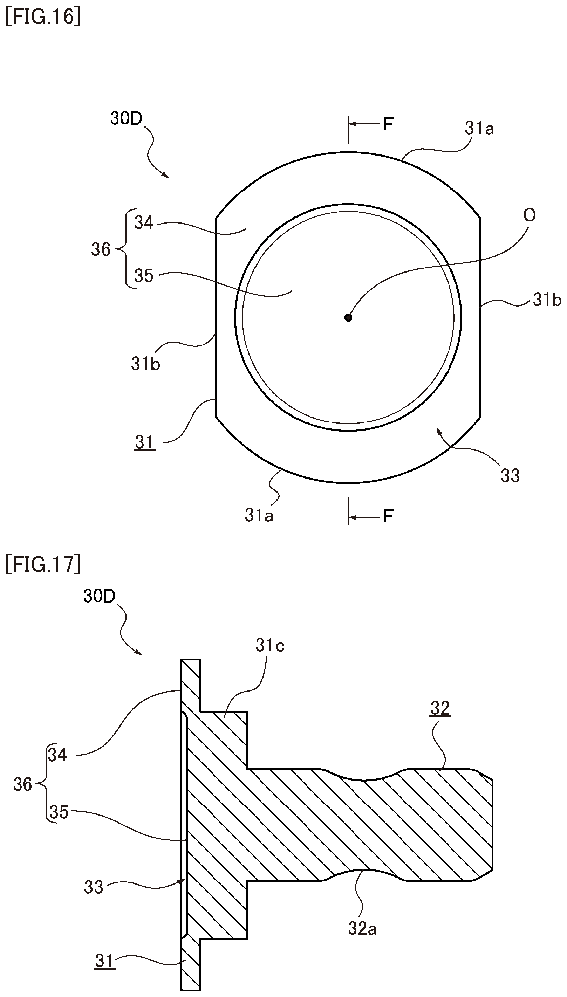

A mill blank assembly 10 according to the fifth embodiment of the present disclosure is described below with reference to FIGS. 15 to 17. The mill blank assembly 10 according to the fifth embodiment has the same basic configuration as the mill blank assembly 10 of the second embodiment shown in FIG. 5, etc., except that no projection portion like the first projection portion 34a of the second embodiment shown in FIG. 5, etc. is provided at the center of the second adhesion surface 33 of the holding portion 30D.

The pedestal 31 of the holding portion 30D of the fifth embodiment includes the circular recess portion 35 around the center O and the projection portion 34 provided on the outer circumference of the recess portion 35 in a concentric circular shape with the recess portion 35, and is not provided with a projection portion at the center.

In the mill blank assembly 10 of the fifth embodiment too, at the adhesion between the second adhesion surface 33 and the first adhesion surface 21, it is preferable that the adhesive layer 40 is formed in the entire recess portion 35 or in an area inside the periphery of the recess portion 35 and is not formed on the top surface of the projection portion 34. With this configuration, internal stress due to thermal contraction or expansion of the holding portion 30D can be appropriately prevented from transmitting to the blank portion 20.

The mill blank assembly 10 of the fifth embodiment of the above configuration also has the same effect as those of the mill blank assemblies 10 of the first and second embodiments. Furthermore, since the recess portion 35 has a large area, the mill blank assembly 10 of the fifth embodiment can make the adhesive layer 40 thicker and uniform in thickness, and more appropriate in area, thereby increasing the adhesive strength and vibration damping property and reducing the risk of fracture.

### (Sixth Embodiment)

A mill blank assembly 10 according to the sixth embodiment of the present disclosure is described below with reference to FIGS. 18 to 20. The mill blank assembly 10 according to the sixth embodiment has the same basic configuration as the mill blank assembly 10 of the first embodiment shown in FIG. 1, etc., except that the uneven structure 24 is provided on the first adhesion surface 21 of a blank portion 20E and that the second adhesion surface 33 of a holding portion 30E is a flat surface (more preferably, a flat surface having an arithmetic mean roughness Ra of 0.2 µm or less).

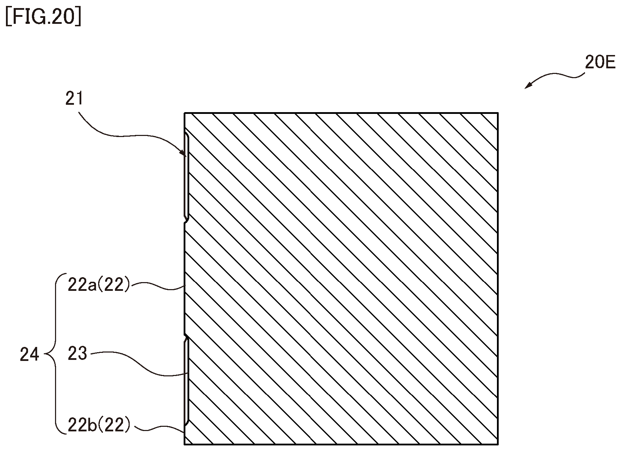

As shown in FIGS. 19 and 20, the first adhesion surface 21 of the blank portion 20E of the sixth embodiment includes a circular first projection portion 22a (22) provided at the center of the first adhesion surface 21, an annular recess portion 23 provided on the outer circumference of the first projection portion 22a, and a second projection portion 22b provided on the outer circumference of the recess portion 23. The first projection portion 22a and the recess portion 23 are provided in a concentric circular shape. The first projection portion 22a, the recess portion 23, and the second projection portion 22b of the first adhesion surface 21 are free from a fit therebetween. The first adhesion surface 21 and the second adhesion surface 33 of the holding portion 30E in their entire areas are free from a fit therebetween. The steps between the first and second projection portions 22a, 22b and the recess portion 23 are not particularly limited, and they may be right-angled, rectangular, tapered, or R-shaped.

At the adhesion between the first adhesion surface 21 of such configuration and the second adhesion surface 33, for example, an adhesive composition may be applied to the center of the second adhesion surface 33 as a flat surface, and then the first adhesion surface 21 may be pressed thereagainst. With this, the adhesive layer 40 is formed at least on the surface of the first projection portion 22a, more preferably on the surfaces of the first projection portion 22a and the recess portion 23. Upon this, it is preferable not to form the adhesive layer 40 on the surface of the second projection portion 22b. For example, if it is a high-viscosity adhesive composition, the adhesive composition may be applied (for example, by dropping) to the center (in vicinity of the center) of the first adhesion surface 21 of the blank portion 20E, and then the second adhesion surface 33 as a flat surface may be pressed thereagainst from above. The adhesion procedure here is not particularly limited, as long as it is a viewpoint that the blank portion 20E is impregnated with the adhesive composition to increase the adhesive strength.

This configuration also allows an adhesion between the first and second adhesion surfaces 21, 33 by the adhesive layer 40 with an appropriate adhesion strength and can prevent internal stress due to thermal contraction or expansion of the holding portion 30E from transmitting to the blank portion 20E.

The mill blank assembly 10 of the sixth embodiment of the above configuration also have the same effect as that of the mill blank assemblies 10 of the first and second embodiments. Furthermore, the mill blank assembly of the sixth embodiment only requires the uneven structure 24 on the first adhesion surface 21 of the blank portion 20E and can use a conventional holding portion of which second adhesion surface 33 is a flat surface, thereby reducing the production cost and improving versatility. The shape of the second adhesion surface 33 of the holding portion 30E to be bonded is not particularly limited. For example, it may be point symmetrical or line symmetrical in an ellipse shape. Furthermore, the mill blank assembly 10 of the sixth embodiment includes the recess portion 23 of a large area, thereby more appropriately reducing the formation of the adhesive layer 40 on the surface of the second projection portion 22b at the adhesion and improving the adhesive strength between the holding portion 30E and the blank portion 20E. As a result, the mill blank assembly 10 of the sixth embodiment can more appropriately reduce the risk of fracture of the blank portion 20E due to temperature changes and vibration, particularly under cold environments.

### (Seventh Embodiment)

A mill blank assembly 10 according to the seventh embodiment of the present disclosure is described below with reference to FIGS. 18 and 21 to 22. Similar to the sixth embodiment, the mill blank assembly 10 according to the seventh embodiment provides the uneven structure 24 on the first adhesion surface 21 of a blank portion 20F and forms the second adhesion surface 33 of the holding portion 30E into a flat surface (more preferably, a flat surface having an arithmetic mean roughness Ra of 0.2 µm or less).

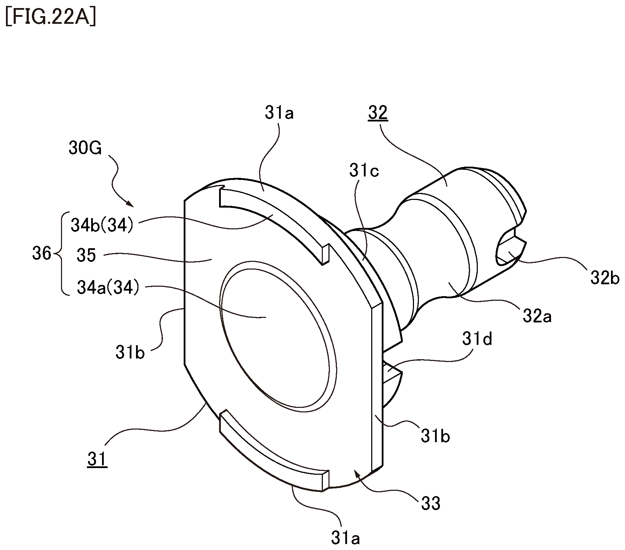

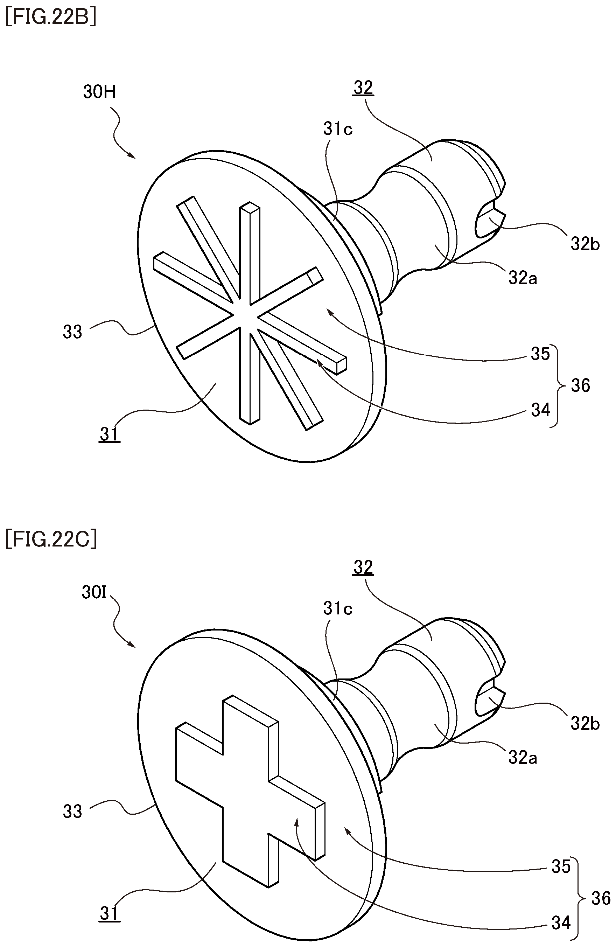

As shown FIGS. 21 and 22, the first adhesion surface 21 of the seventh embodiment includes the annular recess portion 23, provided at the center of the first adhesion surface 21, and the projection portion 22 provided on the outer circumference of the recess portion 23. Since the outer periphery of the recess portion 23 coincides with the inner periphery of the projection portion 22, it is possible to say that these are provided in a concentric circular shape. The recess portion 23 includes the same configuration as that of the recess portion 35 of the fifth embodiment shown in FIG. 15, etc. The projection portion 22 and recess portion 23 of the first adhesion surface 21 are free from a fit therebetween. The first adhesion surface 21 and the second adhesion surface 33 of the holding portion 30E are free from a fit therebetween in their entire areas. The step between the projection portion 22 and the recess portion 23 is not particularly limited. It may be right-angled, rectangular, tapered, or R-shaped.

At the adhesion between the first adhesion surface 21 of such configuration and the second adhesion surface 33, an adhesive composition is applied to the center of the second adhesion surface 33 as a flat surface or the center of the first adhesion surface 21, and then the first adhesion surface 21 is pressed thereagainst. With this, the adhesive layer 40 is formed on the surface of the recess portion 23. Upon this, it is preferable not to form the adhesive layer 40 on the surface of the projection portion 22. This configuration can also appropriately prevent internal stress due to thermal contraction or expansion of the holding portion 30E from transmitting to the blank portion 20F.

The mill blank assembly 10 of the seventh embodiment of the above configuration also has the same effect as that of the mill blank assemblies 10 of the first and sixth embodiments. Furthermore, similar to the second embodiment, the mill blank assembly 10 of the seventh embodiment can make the adhesive layer 40 uniform in thickness and more appropriate in area. Furthermore, similar to the fifth embodiment, since the recess portion 23 has a large area, the mill blank assembly 10 of the seventh embodiment can make the adhesive layer 40 thicker and uniform in thickness, and more appropriate in area, thereby increasing the adhesive strength and vibration damping property and reducing the risk of fracture.

### (Eighth Embodiment)

A mill blank assembly 10 according to the eighth embodiment of the present disclosure is described below with reference to FIG. 22A. The mill blank assembly 10 according to the eighth embodiment has the same basic configuration as the mill blank assembly 10 of the third embodiment shown in FIG. 8, etc., except that the areas of the recess portion 35 and the second projection portion 34b provided on the second adhesion surface 33 of the holding portion 30G are different. More specifically, the circumferential length of the pair of second projection portions 34b of the third embodiment is substantially the same as that of the pair of arc edges 31a of the pedestal 31, but the circumferential length of the pair of second projection portions 34b of the eighth embodiment is shorter than that of the pair of arc edges 31a. With this configuration, the surface area of the second projection portion 34b of the eighth embodiment is smaller, and that of the recess portion 35 is larger.

The circumferential length of the pair of second projection portions 34b is not particularly limited, but it is preferably around 80 %, more preferably around 50 %, most preferably around 30% of the length of the pair of arc edges 31a. As shown in FIG. 22A, the pair of second projection portions 34b of the eighth embodiment is provided in line symmetry and point symmetry generally at the center of the pair of arc edges 31a, but is not limited to this configuration. The pair of second projection portions 34b may be on one or the other side in the circumferential direction of the pair of arc edges 31a to be in line symmetry, point symmetry, or randomly. The second projection portion 34b may be provided by one or in plurality at predetermined interval(s) for the single arc edge 31a.

The mill blank assembly 10 of the eighth embodiment of the above configuration also has the same effect as that of the mill blank assemblies 10 of the first and second embodiments. Furthermore, since the recess portion 35 has a large area, the mill blank assembly 10 of the eighth embodiment allows a larger amount of the adhesive to be applied to the second adhesion surface 33, thereby further improving the peel adhesion strength of the adhesive layer 40. As a result, the mill blank assembly 10 of the eighth embodiment can more appropriately reduce the risk of fracture of the blank portion 20 due to temperature changes and vibration, particularly under cold environments.

### (Ninth Embodiment)

A mill blank assembly 10 according to the ninth embodiment of the present disclosure is described below with reference to FIG. 22B. The mill blank assembly 10 according to the ninth embodiment has the same basic configuration as the mill blank assembly 10 of the first embodiment shown in FIG. 1, etc., except that the shape of the uneven structure 36 provided on the second adhesion surface 33 of a holding portion 30H is different. More specifically, the projection portion 34 of the ninth embodiment is composed of a plurality of linear protrusions provided on the second adhesion surface 33 to extend radially from the center of the pedestal 31. The second adhesion surface 33 except for these radial projection portions 34 serves as the recess portion 35. In the example shown in FIG. 22B, eight radial projection portions 34 are provided from the center, but the number is not limited to eight. The radial length of the projection portions 34 is not particularly limited. As shown in FIG. 22B, it may be shorter than the outer periphery of the pedestal 31 or may reach the outer periphery. All the projection portions 34 may have the same length, or they may have different lengths. The height of the projection portion 34 may be the same as that of the first embodiment, etc., and the width may be 1 to 1.5 mm, but is not limited thereto.

The mill blank assembly 10 of the ninth embodiment of the above configuration also has the same effect as that of the mill blank assemblies 10 of the first and second embodiments. Furthermore, since the projection portions 34 are linear and point symmetric, the mill blank assembly 10 of the ninth embodiment can be easily produced and is superior in stability for supporting the blank portion 20 by the holding portion 30. As a result, the mill blank assembly 10 of the ninth embodiment can more appropriately reduce the risk of fracture of the blank portion 20 due to temperature changes and vibration, particularly under cold environments.

### (Tenth Embodiment)

A mill blank assembly 10 according to the tenth embodiment of the present disclosure is described below with reference to FIG. 22C. The mill blank assembly 10 according to the tenth embodiment has the same basic configuration as the mill blank assembly 10 of the ninth embodiment shown in FIG. 22B, except that the shape of the projection portion 34 of the uneven structure 36 provided on the second adhesion surface 33 of a holding portion 30I is different. More specifically, the projection portion 34 of the ninth embodiment is composed of eight radial protrusions, whereas that of the tenth embodiment is composed of four radial protrusions and presents a cross shape in plan view. The width of the projection portion 34 of the tenth embodiment is larger than that of the ninth embodiment.

The mill blank assembly 10 of the tenth embodiment of the above configuration also has the same effect as that of the mill blank assemblies 10 of the first and second embodiments. Furthermore, similar to the ninth embodiment, since the projection portions 34 are linear and point symmetric, the mill blank assembly 10 of the tenth embodiment can be easily produced and is superior in stability for supporting the blank portion 20 by the holding portion 30. As a result, the mill blank assembly 10 of the tenth embodiment can more appropriately reduce the risk of fracture of the blank portion 20 due to temperature changes and vibration, particularly under cold environments.

### [Examples]

Various physical properties described herein were measured according to the following methods and conditions.

[Measurement of Vickers Hardness] Vickers hardness of the blank 20 was measured in accordance with JIS Z 2244:2009 ISO 6872:2015. Using a micro/macro Vickers hardness tester (product name: "Falcon 500" made by INNOVATEST Japan Co, Ltd.), the sample was held for 30 seconds under a load of 5 kgf to calculate the Hv value (the average of n = 10). "HV 5/30" means that the sample is held for 30 seconds under a load of 5 kgf as the test force.

[Measurement of Projection Portion Height or Recess Portion Depth] The height of projection portion or the depth of recess portion of each example and each comparative example was measured by the following procedure. The holding portion of each example or comparative example was fixed to a fixture made of a molded urethane to make the adhesion surface horizontal, followed by placing on a sample stand of a color 3D laser microscope (VK-9700 made by KEYENCE CORPORATION). Facing the color 3D laser microscope, the left-right direction is defined as X-axis, the front-back direction is Y-axis, and the up-down direction is Z-axis. The position of the holding portion 3 was adjusted to make the step portion of each example or comparative example horizontal at the center position of the image of a measurement software VK Viewer (software version: 2.5.0.2 made by KEYENCE CORPORATION), and the focus was adjusted with a dial on the microscope body. Then, the focus was shifted upward on Z-axis of the measurement with a lens position adjustment button of VK Viewer, and the point where the entire image was blurred was set as the upper limit of the measurement range. Similarly, the focus was shifted in the downward direction on Z-axis of the measurement, and the point where the entire image was blurred was set as the lower limit of the measurement range. At this time, the Z-axis measurement range was adjusted to be approximately twice the height of projection portion or the depth of recess portion. Furthermore, the laser brightness was adjusted automatically on the VK Viewer, and a filter of 30 % light intensity was selected. Next, the measurement was started with the Z-axis measurement pitch set to 1 µm, the measurement mode set to Surface Profile, the measurement area set to Surface, and the measurement quality set to High Definition. At this time, the holding portion of each example or comparative example was allowed to stand still at a room temperature of 25 ± 2 °C for at least 30 minutes before the measurement so that the temperature would be 24 ± 2 °C. The temperature of the holding portion of each example or comparative example was measured with a radiation thermometer (TN418JCR made by AS ONE Corporation) at a position vertically upward away from the adhesion surface by 15 cm. The measurement was conducted with an illuminance of 500 ± 200 1x in the measurement room, an objective lens of 20x (20x/0.46 WD3.1 made by Nikon Corporation), and a VK Viewer's Zoom function of 1.0X. The obtained measurement results were subjected to the noise removal (detection area: normal) and the surface inclination correction of the top surface of the projection portion to make the measurement results horizontal, by using an analysis software VK Analyzer (software version: 2.5.0.1 made by KEYENCE CORPORATION). Vertical line was selected in the Profile, and a height difference graph was obtained by making an adjustment to the center of the measurement results. The difference between a top flat or top edge portion and a bottom flat or bottom edge portion, which are adjacent to each other in the height difference graph, was determined as the height of the projection portion or the depth of the recess portion. The same measurement was conducted on arbitrary five positions including the step portion of the holding portion of each example or comparative example, and the average of the measured values was determined as the height of projection portion or the depth of recess portion.

[Measurement of Thickness of Adhesive Layer] The produced mill blank assembly was cut, and then the thickness of the adhesive layer of the adhesive-composition cured material on the section was measured. The thickness of the adhesive-composition cured material, that is, the thickness of the adhesive layer 40, was observed and measured by an optical microscope (DIGITAL MICROSCOPE KH-7700 made by HIROX CO., LTD.) (n = 1).

[Measurement of Peel Adhesion Strength (Compression Shear Adhesion Test)] The holding portion was fixed to a fixture, and a load was applied to a position of the blank portion that was 18 mm from the first adhesion surface by a support roller. The load when the blank portion peeled off from the holding portion was measured by a tabletop precision universal testing machine (AUTOGRAPH AGS-5kNX made by Shimadzu Corporation). The support roller was lowered at a speed of 1.0 mm/s. The peel adhesion strength was measured, after adhesion and then standing still at 20 °C for 24 hours, or after adhesion, then standing still at 20°C for 24 hours, then standing still at -30 °C for 24 hours and then standing still at room temperature (e.g., 20 °C) for 24 hours (n = 5).

Specific Examples 1 to 40 and Comparative Examples 1 to 3 of the present disclosure will be described in the following with reference to Tables 1 to 7. These Tables 1 to 7 show preparation conditions, such as material, type, dimensions, areas, and areal percentages, peel adhesion strength, etc. of the blank portions 20, 20E, 20F, 2 and the holding portions 30, 30A to 30I, and the adhesive layer 40 of the mill blank assembly 10 of each example and of the mill blank assembly 1 of each comparative example. Based on the preparation conditions described in these tables, the present inventors have prepared the mill blank assembly 10 of each example and the mill blank assembly 10, 1, 1A of each comparative example and then have measured peel adhesion strength by the above-mentioned measurement procedure. Peel adhesion strength was shown in both N (newton) and MPa (megapascal).

### [Table 1]

**[Table 1]**

| | | Example 1 | Example 2 | Example 3 | Example 4 | Example 5 | Example 6 | Example 7 |
|---|---|---|---|---|---|---|---|---|
| Blank portion | Material | Zirconia | Zirconia | Zirconia | Zirconia | Zirconia | Zirconia | Zirconia |
| | Vickers hardness [Hv 5/30] | 76 | 76 | 76 | 76 | 76 | 76 | 76 |
| | First adhesion surface's shape | Flat surface | Flat surface | Flat surface | Flat surface | Flat surface | Flat surface | Flat surface |
| | S1 [mm²] | 317 | 317 | 317 | 317 | 317 | 317 | 317 |
| Holding portion | Material | Al alloy | Al alloy | Al alloy | A1 alloy | A1 alloy | Al alloy | A1 alloy |
| | Second adhesion surface's shape | Shape of FIG. 3 Projection portion: 6mm diameter, Circular, 100µm height | Shape of FIG. 3 Projection portion: 6mm diameter, Circular, 200µm height | Shape of FIG. 3 Projection portion: 6mm diameter, Circular, 200µm height | Shape of FIG. 3 Projection portion: 8mm diameter, Circular, 200µm height | Shape of FIG. 3 Projection portion: 10mm diameter, Circular, 200µm height | Shape of FIG. 6 Recess portion: 12mm diameter, Concentric ring, 200µm depth, Projection portion: 6mm diameter, 200µm height | Shape of FIG. 9 Recess portion: 15mm diameter. Concentric ring, 200µm depth. Projection portion: 6mm diameter, 200µm height |
| | S2 [mm²] | 216 | 216 | 216 | 216 | 216 | 216 | 216 |
| Adhesive composition | Brand | Bond Quick 30 | Bond Quick 30 | Bond Quick 30 | Bond Quick 30 | Bond Quick 30 | Bond Quick 30 | Bond Quick 30 |
| | Type | Epoxy | Epoxy | Epoxy | Epoxy | Epoxy | Fpoxy | Epoxy |
| | Application amount (ml) | 0.016 | 0.020 | 0.004 | 0.020 | 0.020 | 0.020 | 0.020 |
| Maximum thickness of adhesive layer [µm] | | 110 | 210 | 10 | 210 | 210 | 210 | 210 |
| S3 [mm²] | | 27 | 27 | 27 | 50 | 79 | 27 | 27 |
| S4 [mm²] | | 113 | 94 | 0 | 76 | 52 | 84 | 89 |
| S5 [mm²] | | 140 | 121 | 27 | 126 | 131 | 111 | 116 |
| ratio S3/S1 [%] | | 8.5 | 8.5 | 8.5 | 15.8 | 24.9 | 8.5 | 8.5 |
| ratio S4/S1 [%] | | 36 | 30 | 0 | 24 | 16 | 26 | 28 |
| ratio S3/S2 [%] | | 13 | 13 | 13 | 23 | 37 | 13 | 13 |
| ratio S4/S2 [%] | | 52 | 44 | 0 | 35 | 24 | 39 | 41 |
| ratio S5/S1 [%] | | 44 | 38 | 9 | 40 | 41 | 35 | 37 |
| ratio S5/S2 [%] | | 65 | 56 | 13 | 58 | 61 | 51 | 54 |
| Peel adhesion strength | N1 [N] | 310 | 298 | 163 | 371 | 459 | 337 | 392 |
| | N2 [N] | 290 | 301 | 159 | 347 | 405 | 308 | 404 |
| | ratio N2/N1 [%] | 94 | 101 | 98 | 94 | 88 | 91 | 103 |
| Peel adhesion strength | N1 [MPa] | 2.2 | 2.5 | 6.0 | 2.9 | 3.5 | 3.0 | 3.4 |
| | N2[MPa] | 2.1 | 2.5 | 5.9 | 2.8 | 3.1 | 2.8 | 3.5 |

### [Table 2]

**[Table 2]**

| | | Example 8 | Example 9 | Example 10 | Example 11 | Example 12 | Example 13 | Example 14 |
|---|---|---|---|---|---|---|---|---|
| Blank portion | Material | Zirconia | Zirconia | Zirconia | Zirconia | Zirconia | Zirconia | Zirconia |
| | Vickers hardness [Hv 5/30] | 78 | 75 | 76 | 76 | 76 | 76 | 76 |
| | First adhesion surface's shape | Flat surface | Flat surface | Flat surface | Flat surface | Flat surface | Flat surface | Flat surface |
| | S1 [mm²] | 342 | 294 | 342 | 317 | 317 | 317 | 317 |
| Holding portion | Material | Al alloy | Al alloy | Al alloy | Al alloy | Al alloy | Al alloy | Al alloy |
| | | Shape similar to that of FIG. 9 but with a larger area Recess portion: 15mm diameter, Concentric ring, 200µm depth, Projection portion: 6mm diameter, 200µm height | Shape of FIG.12 Recess portion: 15mm diameter, Concentric ring, 200µm depth, Projection portion: 6mm diameter, 200µm height | Shape similar to that of FIG. 9 but with a larger area Recess portion: 15mm diameter, Concentric ring, 200µm depth, Projection portion: 6mm diameter, 200µm height | Shape of FIG. 9 Recess portion: 15mm diameter, Concentric ring, 200µm depth, Projection portion: 6mm diameter, 200µm height | Shape of FIG. 9 Recess portion: 15mm diameter, Concentric ring, 350µm depth, Projection portion: 6mm diameter, 350µm height | | |
| | Second adhesion surface's shape | | | | | | Shape of FIG.16 Recess portion: 12mm diameter, Circular, 200µm depth | Shape of FIG.16 Recess portion: 12mm diameter, Circular, 200µm depth |
| | S2 [mm²] | 263 | 237 | 263 | 216 | 216 | 216 | 216 |
| Adhesive composition | Brand | Bond Quick 30 | Bond Quick 30 | Bond Quick 30 | Bond Quick 30 | Bond Quick 30 | Bond Quick 30 | Bond Quick 30 |
| | Type | Epoxy | Epoxy | Epoxy | Epoxy | Epoxy | Epoxy | Epoxy |
| | Application amount (ml) | 0.020 | 0.020 | 0.038 | 0.024 | 0.024 | 0.020 | 0.016 |
| Maximum thickness of adhesive laver [µm] | | 210 | 210 | 210 | 210 | 360 | 200 | 200 |
| S3 [mm²] | | 27 | 27 | 27 | 27 | 27 | 0 | 0 |
| S4 [mm²] | | 89 | 89 | 196 | 99 | 66 | 110 | 89 |
| S5 [mm²] | | 116 | 116 | 223 | 126 | 93 | 110 | 89 |
| ratio S3/S1 [%] | | 7.9 | 9.2 | 7.9 | 8.5 | 8.5 | 0.0 | 0.0 |
| ratio S4/S1 [%] | | 26 | 30 | 57 | 31 | 21 | 35 | 28 |
| ratio S3/S2 [%] | | 10 | 11 | 10 | 13 | 13 | 0.0 | 0.0 |
| ratio S4/S2 [%] | | 34 | 38 | 75 | 46 | 31 | 51 | 41 |
| ratio S5/S1 [%] | | 34 | 39 | 65 | 40 | 29 | 35 | 28 |
| ratio S5/S2 [%] | | 44 | 49 | 85 | 58 | 43 | 51 | 41 |
| Peel adhesion strength | N1 [N] | 285 | 388 | 487 | 443 | 281 | 214 | 157 |
| | N2 [N] | 293 | 401 | 519 | 474 | 286 | 186 | 144 |
| | ratio N2/N 1 [%] | 103 | 103 | 107 | 107 | 102 | 87 | 92 |
| Peel adhesion strength | N1 [MPa] | 2.5 | 3.3 | 2.2 | 3.5 | 3.0 | 1.9 | 1.8 |
| | N2[MPa] | 2.5 | 3.5 | 2.3 | 3.8 | 3.1 | 1.7 | 1.6 |

Examples 1 to 5 are specific embodiments of the mill blank assembly 10 according to the first embodiment shown in FIGS. 1 to 4. As shown in Table 1, the diameter and height of the projection portion 34, the amount of application of the adhesive composition, and the thickness and area of the adhesive layer are respectively varied.

Example 6 is a specific embodiment of the mill blank assembly 10 according to the second embodiment shown in FIGS. 5 to 7. Examples 7 and 8 are specific embodiments of the mill blank assembly 10 according to the third embodiment shown in FIGS. 8 to 10. As shown in Tables 1 and 2, they are examples in which the total area S2 of the second adhesion surface 33 has been varied.

Example 9 is a specific embodiment of the mill blank assembly 10 according to the fourth embodiment shown in FIGS. 11 to 14. Examples 10 to 12 are specific embodiments of the mill blank assembly 10 according to the third embodiment shown in FIGS. 8 to 10, and they are examples in which the amount of application of the adhesive composition and the contact area S4 between the adhesive layer 40 and the first adhesion surface 21 have been varied, as shown in Table 2. Examples 13 and 14 are specific embodiments of the mill blank assembly 10 of the fifth embodiment shown in FIGS. 15 to 17 of the present disclosure, and they are examples in which the amount of application of the adhesive composition and the contact area S4 between the adhesive layer 40 and the first adhesion surface 21 have been varied, as shown in Table 2.

### [Table 3]

**[Table 3]**

| | | Example 15 | Example 16 | Example 17 | Example 18 | Example 19 |
|---|---|---|---|---|---|---|
| Blank portion | Material | Zirconia | Zirconia | Zirconia | Zirconia | Zirconia |
| | Vickers hardness [Hv 5/30] | 76 | 76 | 76 | 76 | 76 |
| | First adhesion surface's shape | Flat surface | Flat surface | Flat surface | Shape of FIG.19 Projection portion: 6mm diameter, Circular, 200µm height | Shape of FIG.21 Recess portion: 6mm diameter, Circular, 200µm height |
| | S1 [mm²] | 317 | 317 | 317 | 317 | 317 |
| Holding portion | Material | Al alloy | Al alloy | Fe alloy | Al alloy | Al alloy |
| | Second adhesion surface's shape | Shape of FIG. 9 Recess portion: 15mm diameter, Concentric ring, 200µm depth, Projection portion: 6mm diameter, 200µm height | Shape of FIG. 9 Recess portion: 15mm diameter, Concentric ring, 200µm depth, Projection portion: 6mm diameter, 200µm height | Shape of FIG. 9 Recess portion: 15mm diameter, Concentric ring, 200µm depth, Projection portion: 6mm diameter, 200µm height | Flat surface | Flat surface |
| | S2 [mm²] | 216 | 216 | 216 | 216 | 216 |
| Adhesive composition | Brand | EP001N | Aron alpha Extra 4000 | Bond Quick 30 | Bond Quick 30 | Bond Quick 30 |
| | Type | Epoxy-modified Silicone | Cyanoacrylate | Epoxy | Epoxy | Epoxy |
| | Application amount (ml) | 0.020 | 0.020 | 0.020 | 0.020 | 0.020 |
| Maximum thickness of adhesive layer [µm] | | 210 | 210 | 210 | 210 | 200 |
| S3 [mm²] | | 27 | 27 | 27 | - | - |
| S4 [mm²] | | 89 | 89 | 89 | - | - |
| S5 [mm²] | | 116 | 116 | 116 | - | - |
| ratio S3/S1 [%] | | 8.5 | 8.5 | 8.5 | - | - |
| ratio S4/S1 [%] | | 28 | 28 | 28 | - | - |
| ratio S3/S2 [%] | | 13 | 13 | 13 | - | - |
| ratio S4/S2 [%] | | 41 | 41 | 41 | - | - |
| ratio S5/S1 [%] | | 37 | 37 | 37 | - | - |
| ratio S5/S2 [%] | | 54 | 54 | 54 | - | - |
| Peel adhesion strength | N1 [N] | 192 | 378 | 402 | 366 | 188 |
| | N2 [N] | 212 | 322 | 422 | 322 | 150 |
| | ratio N2/N1 [%] | 110 | 85 | 105 | 88 | 80 |
| Peel adhesion strength | N1 [MPa] | 1.7 | 3.3 | 3.5 | 3.0 | 1.7 |
| | N2[MPa] | 1.8 | 2.8 | 3.6 | 2.7 | 1.4 |

Examples 15 to 17 are specific embodiments of the mill blank assembly 10 of the third embodiment shown in FIGS. 8 to 10, and they are examples in which the material of the holding portion 30B, the type of the adhesive composition, and the like have been veried, as shown in Table 3. Example 18 is a specific embodiment of the mill blank assembly 10 of the sixth embodiment shown in FIGS. 18 to 20. Example 19 is a specific embodiment of the mill blank assembly 10 of the seventh embodiment shown in FIGS. 18 and 21 to 22.

### [Table 4]

**[Table 4]**

| | | Example 20 | Example 21 | Example 22 | Example 23 | Example 24 | Example 25 | Example 26 |
|---|---|---|---|---|---|---|---|---|
| Blank portion | Material | Zirconia | Zirconia | Zirconia | Zirconia | Zirconia | Zirconia | Zirconia |
| | Vickers hardness [Hv 5/30] | 76 | 76 | 76 | 76 | 76 | 76 | 76 |
| | First adhesion surface's shape | Flat surface | Flat surface | Flat surface | Flat surface | Flat surface | Flat surface | Flat surface |
| | S1 [mm²] | 317 | 317 | 317 | 317 | 317 | 317 | 317 |
| Holding portion | Material | Al alloy | Al alloy | Al alloy | Al alloy | Al alloy | Al alloy | Al alloy |
| | | | | | | Shape of FIG. 9 Recess portion: 15mm diameter, Concentric ring, 200µm depth. Projection portion: 6mm diameter, 200µm height Groove shape: Random, Roughness (Ra): 0.81µm | Shape of FIG. 9 Recess portion: 15mm diameter, Concentric ring, 200µm depth, Projection portion: 6mm diameter, 200µm height, Groove shape: Spiral, Roughness (Ra): 0.81µm | Shape of FIG. 9 Recess portion: 15mm diameter, Concentric ring, 200µm depth, Projection portion: 6mm diameter, 200µm height, Groove shape: Concentric, Roughness (Ra): 0.81 µm |
| | Second adhesion surface's shape | Shape of FIG.22B Radial, Projection portion: 1 mm width, 10mm length, 200µm height | Shape of FIG.22B Radial. Projection portion: 1mm width, 10mm length, 350µm height | Shape of FIG.22C Cross, Projection portion: 1.5mm width, 10mm length, 200µm height | Shape of FIG.22C Cross, Projection portion: 1.5mm width, 10mm length, 350µm height | | | |
| | S2 [mm²] | 216 | 216 | 216 | 216 | 216 | 216 | 216 |
| Adhesive composition | Brand | Bond Quick 30 | Bond Quick 30 | Bond Quick 30 | Bond Quick 30 | Bond Quick 30 | Bond Quick 30 | Bond Quick 30 |
| | Type | Epoxy | Epoxy | Epoxy | Epoxy | Fpoxy | Epoxy | Epoxy |
| | Application amount (ml) | 0.024 | 0.024 | 0.024 | 0.024 | 0.024 | 0.024 | 0.024 |
| Maximum thickness of adhesive layer [µm] | | 210 | 360 | 210 | 360 | 210 | 210 | 210 |
| S3 [mm²] | | 27 | 27 | 27 | 27 | 27 | 27 | 27 |
| S4 [mm²] | | 99 | 66 | 99 | 66 | 99 | 99 | 99 |
| S5 [mm²] | | 126 | 93 | 126 | 93 | 126 | 126 | 126 |
| ratio S3/S1 [%] | | 8.5 | 8.5 | 8.5 | 8.5 | 8.5 | 8.5 | 8.5 |
| ratio S4/S1 [%] | | 31.2 | 20.8 | 31.2 | 20.8 | 31.2 | 31.2 | 31.2 |
| ratio S3/S2 [%] | | 12.5 | 12.5 | 12.5 | 12.5 | 12.5 | 12.5 | 12.5 |
| ratio S4/S2 [%] | | 45.8 | 30.6 | 45.8 | 30.6 | 45.8 | 45.8 | 45.8 |
| ratio S5/S1 [%] | | 39.7 | 29.3 | 39.7 | 29.3 | 39.7 | 39.7 | 39.7 |
| ratio S5/S2 [%] | | 58.3 | 43.1 | 58.3 | 43.1 | 58.3 | 58.3 | 58.3 |
| Peel adhesion strength | N1 [N] | 439 | 278 | 421 | 256 | 547 | 523 | 533 |
| | N2 [N] | 415 | 255 | 406 | 239 | 587 | 561 | 568 |
| | ratio N2/N1 [%] | 95 | 92 | 96 | 93 | 107 | 107 | 107 |
| Peel adhesion strength | N1 [MPa] | 3.5 | 3.0 | 3.3 | 2.8 | 4.3 | 4.2 | 4.2 |
| | N2[MPa] | 3.3 | 2.7 | 3.2 | 2.6 | 4.7 | 4.5 | 4.5 |

Examples 20 and 21 are specific embodiments of the mill blank assembly 10 of the ninth embodiment shown in FIG. 22B, and they are examples in which the thickness of the adhesive layer 40 has been varied by changing the height of the radial projection portions 34 of the holding portion 30H. Examples 22 and 23 are specific embodiments of the mill blank assembly 10 of the tenth embodiment shown in FIG. 22C. As shown in Table 4, they are examples in which the thickness of the adhesive layer 40 has been varied by changing the height of the cross-shaped projection portion 34 of the holding portion 30I.

Examples 24 to 26 are specific embodiments of the mill blank assembly 10 according to modified embodiments of the third embodiment shown in FIGS. 8 to 10. As shown in Table 4, Examples 24 to 26 are examples in which a fine unevenness is formed on the first projection portion 34a, the second projection portion 34b, and the recess portion 35 as the entire surface of the second adhesion surface 33 of the holding portion 30B to make an arithmetic mean roughness Ra of 0.81 µm, and in which the shape of the fine unevenness has been varied. In Example 24, the second adhesion surface 33 is formed with random-shaped fine unevenness. The random shape does not refer to unevenness or grooves expressed as a specific figure having a constant length, such as a straight line, spiral, or circle, but refers to the shape of unevenness or grooves randomly given, for example, by barrel polishing (see JP7315316B2). In Example 25, the second adhesion surface 33 is formed with spiral fine uneven grooves. In Example 26, the second adhesion surface 33 is formed with concentric circular fine uneven grooves. The spiral or concentric circular fine uneven grooves in Examples 24 and 26 can be easily given, for example, by lathe machining (see JP7315316B2).

### [Table 5]

**[Table 5]**

| | | Example 27 | Example 28 | Example 29 | Example 30 | Example 31 | Example 32 | Example 33 |
|---|---|---|---|---|---|---|---|---|
| Blank portion | Material | Zirconia | Zirconia | Zirconia | Zirconia | Zirconia | Zirconia | Zirconia |
| | Vickers hardness [Hv 5/30] | 76 | 76 | 76 | 76 | 76 | 76 | 76 |
| | First adhesion surface's shape | Flat surface | Flat surface | Flat surface | Flat surface | Flat surface | Flat surface | Flat surface |
| | S1 [mm²] | 317 | 317 | 317 | 317 | 317 | 317 | 317 |
| Holding portion | Material | Al alloy | Al alloy | Al alloy | Al alloy | Al alloy | Al alloy | Al alloy |
| | Second adhesion surface's shape | Shape of FIG. 3 Projection portion: 6mm diameter, Circular, 80µm height | Shape of FIG. 3 Projection portion: 6mm diameter, Circular, 90µm height | Shape of FIG. 3 Projection portion: 6mm diameter, Circular, 110µm height | Shape of FIG. 3 Projection portion: 6mm diameter, Circular, 130µm height | Shape of FIG. 3 Projection portion: 6mm diameter, Circular, 140µm height | Shape of FIG. 3 Projection portion: 6mm diameter, Circular, 230µm height | Shape of FIG. 3 Projection portion: 6mm diameter, Circular, 240µm height |
| | S2 [mm²] | 216 | 216 | 216 | 216 | 216 | 216 | 216 |
| Adhesive composition | Brand | Bond Quick 30 | Bond Quick 30 | Bond Quick 30 | Bond Quick 30 | Bond Quick 30 | Bond Quick 30 | Bond Quick 30 |
| | Type | Epoxy | Epoxy | Epoxy | Epoxy | Epoxy | Epoxy | Epoxy |
| | Application amount (ml) | 0.016 | 0.016 | 0.016 | 0.016 | 0.020 | 0.024 | 0.024 |
| Maximum thickness of adhesive laver [µm] | | 90 | 100 | 120 | 140 | 150 | 240 | 250 |
| S3 [mm²] | | 27 | 27 | 27 | 27 | 27 | 27 | 27 |
| S4 [mm²] | | 122 | 118 | 109 | 101 | 107 | 127 | 117 |
| S5 [mm²] | | 149 | 145 | 136 | 128 | 134 | 154 | 144 |
| ratio S3/S1 [%] | | 8.5 | 8.5 | 8.5 | 8.5 | *8.5* | 8.5 | 8.5 |
| ratio S4/S1 [%] | | 38.5 | 37.2 | 34.4 | 31.9 | 33.8 | 40.1 | 36.9 |
| ratio S3/S2 [%] | | 12.5 | 12.5 | 12.5 | 12.5 | 12.5 | 12.5 | 12.5 |
| ratio S4/S2 [%] | | 56.5 | 54.6 | 50.5 | 46.8 | 49.5 | 58.8 | 54.2 |
| ratio S5/S1 [%] | | 47.0 | 45.7 | 42.9 | 40.4 | 42.3 | 48.6 | 45.4 |
| ratio S5/S2 [%] | | 69.0 | 67.1 | 63.0 | 59.3 | 62.0 | 71.3 | 66.7 |
| Peel adhesion strength | N1 [N] | 410 | 418 | 423 | 431 | 438 | 451 | 448 |
| | N2 [N] | 328 | 362 | 390 | 425 | 442 | 482 | 481 |
| | ratio N2/N 1 [%] | 80 | 87 | 92 | 99 | 101 | 107 | 107 |
| Peel adhesion strength | N1 [MPa] | 2.8 | 2.9 | 3.1 | 3.4 | 3.3 | 2.9 | *3.1* |
| | N2[MPa] | 2.2 | 2.5 | 2.9 | 3.3 | 3.3 | 3.1 | 3.3 |

### [Table 6]

**[Table 6]**

| | | Example 34 | Example 35 | Example 36 | Example 37 | Example 38 | Example 39 | Example 40 |
|---|---|---|---|---|---|---|---|---|
| Blank portion | Material | Zirconia | Zirconia | Zirconia | Zirconia | Zirconia | Zirconia | Zirconia |
| | Vickers hardness [Hv 5/30] | 76 | 76 | 76 | 76 | 76 | 76 | 76 |
| | First adhesion surface's shape | Flat surface | Flat surface | Flat surface | Flat surface | Flat surface | Flat surface | Flat surface |
| | S1 [mm²] | 317 | 317 | 317 | 317 | 317 | 317 | 317 |
| Holding portion | Material | Al alloy | Al alloy | Al alloy | Al alloy | Al alloy | Al alloy | Al alloy |
| | Second adhesion surface's shape | Shape of FIG. 3 Projection portion: 6mm diameter, Circular, 250µm height | Shape of FIG. 3 Projection portion: 6mm diameter, Circular, 380µm height | Shape of FIG. 3 Projection portion: 6mm diameter, Circular, 400µm height | Shape of FIG. 9 Recess portion: 17.1mm diameter, Concentric ring, 200µm depth, Projection portion: 8mm diameter, 200µm height | Shape of FIG. 9 Recess portion: 15mm diameter, Concentric ring, 200µm depth, Projection portion: 8mm diameter, 200µm height, Arc edge: 33% in circumference | Shape of FIG. 9 Recess portion: 17.1mm diameter, Concentric ring, 200µm depth, Projection portion: 8mm diameter, 200µm height, Arc edge: 33% in circumference | Shape of FIG. 9 Recess portion: 17.1 mm diameter, Concentric ring, 200µm depth, Projection portion: 8mm diameter, 200µm height, Arc edge: 100µm height |
| | S2 [mm²] | 216 | 216 | 216 | 216 | 216 | 216 | 216 |
| Adhesive composition | Brand | Bond Quick 30 | Bond Quick 30 | Bond Quick 30 | Bond Quick 30 | Bond Quick 30 | Bond Quick 30 | Bond Quick 30 |
| | Type | Epoxy | Epoxy | Epoxy | Epoxy | Epoxy | Epoxv | Epoxy |
| | Application amount (ml) | 0.024 | 0.038 | 0.038 | 0.031 | 0.024 | 0.031 | 0.031 |
| Maximum thickness of adhesive layer [µm] | | 260 | 390 | 410 | 210 | 210 | 210 | 210 |
| S3 [mm²] | | 27 | 27 | 27 | 50 | 50 | 50 | 50 |
| S4 [mm²] | | 107 | 127 | 118 | 136 | 99 | 136 | 136 |
| S5 [mm²] | | 134 | 154 | 145 | 186 | 149 | 186 | 186 |
| ratio S3/S1 [%] | | 8.5 | 8.5 | 8.5 | 15.8 | 15.8 | 15.8 | 15.8 |
| ratio S4/S1 [%] | | 33.8 | 40.1 | 37.2 | 42.9 | 31.2 | 42.9 | 42.9 |
| ratio S3/S2 [%] | | 12.5 | 12.5 | 12.5 | 23.1 | 23.1 | 23.1 | 23.1 |
| ratio S4/S2 [%] | | 49.5 | 58.8 | 54.6 | 63.0 | 45.8 | 63.0 | 63.0 |
| ratio S5/S1 [%] | | 42.3 | 48.6 | 45.7 | 58.7 | 47.0 | 58.7 | 58.7 |
| ratio S5/S2 [%] | | 62.0 | 71.3 | 67.1 | 86.1 | 69.0 | 86.1 | 86.1 |
| Peel adhesion strength | N1 [N] | 442 | 276 | 223 | 497 | 458 | 476 | 488 |
| | N2 [N] | 471 | 281 | 232 | 529 | 485 | 505 | 518 |
| | ratio N2/N1 [%] | 107 | 102 | 104 | 106 | 106 | 106 | 106 |
| Peel adhesion strength | N1 [MPa] | 3.3 | 1.8 | 1.5 | 2.7 | 3.1 | 2.6 | 2.6 |
| | N2[MPa] | 3.5 | 1.8 | 1.6 | 2.8 | 3.3 | 2.7 | 2.8 |

Examples 27 to 36 are specific examples of the mill blank assembly 10 of the first embodiment shown in FIGS. 1 to 4. As shown in Tables 5 and 6, they are examples in which the thickness of the adhesive layer 40 has been varied by changing the height of the projection portion 34 of the holding portion 30.

Example 37 is a specific example of the mill blank assembly 10 of the third embodiment shown in FIGS. 8 to 10 and is an example in which the radial width of the second projection portion 34b has been thinned, as shown in Table 6. Specifically, the diameter of an inner arc (concentric circle) of the second projection portion 34b has been set to 17.1 mm. Examples 38 to 39 are specific examples of the mill blank assembly 10 of the ninth embodiment shown in FIG. 22A and are examples in which the radial width and circumferential length of the second projection portion 34b have been varied, as shown in Table 6. Specifically, Example 38 is that the diameter of an inner arc (concentric circle) of the second projection portion 34b has been set to 15 mm, and Example 39 is that the diameter thereof has been set to 17.1 mm. The circumferential length of the second projection portion 34b of Examples 38 to 39 has been set to 33 % of the arc edge 31a. Example 40 is a specific example of the mill blank assembly 10 of the third embodiment shown in FIGS. 8 to 10. As shown in Table 6, it is an example in which the radial width of the second projection portion 34b has been thinned and in which the first projection portion 34a has been made higher than the second projection portion 34b.

### [Table 7]

**[Table 7]**

| | | Comparative Example 1 | Comparative Example 2 | Comparative Example 3 |
|---|---|---|---|---|
| Blank portion | Material | Zirconia | Zirconia | Zirconia |
| | Vickers hardness [Hv 5/30] | - | - | 76 |
| | First adhesion surface's shape | Shape of FIG. 23 (with circular projection portion) | Shape of FIG. 24 (with circular recess portion) | Flat surface |
| | S1 [mm²] | - | - | 317 |
| Holding portion | Material | Al alloy | Al alloy | A1 alloy |
| | Second adhesion surface's shape | Shape of FIG. 23 (with circular recess portion) | Shape of FIG. 24 (with circular projection portion) | Flat surface, Fine random-shape unevenness: Surface roughness Ra 0.2µmm |
| | S2 [mm²] | - | - | 216 |
| Adhesive composition | Brand | Bond Quick 30 | Bond Quick 30 | Bond Quick 30 |
| | Type | Epoxy | Epoxy | Epoxy |
| | Application amount (ml) | 0.020 | 0.020 | 0.020 |
| Maximum thickness of adhesive layer [µm] | | 10 | 10 | 10 |
| S3 [mm²] | | - | - | - |
| S4 [mm²] | | - | - | - |
| S5 [mm²] | | - | - | - |
| ratio S3/S1 [%] | | - | - | - |
| ratio S4/S1 [%] | | - | - | - |
| ratio S3/S2 [%] | | - | - | - |
| ratio S4/S2 [%] | | - | - | - |
| ratio S5/S1 [%] | | - | - | - |
| ratio S5/S2 [%] | | - | - | - |
| Peel adhesion strength | N1 [N] | - | 355 | - |
| | N2 [N] | Fracture | 38 | Fracture |
| | ratio N2/N1 [%] | - | 11 | - |
| Peel adhesion strength | N1 [MPa] | - | - | - |
| | N2[MPa] | - | - | - |

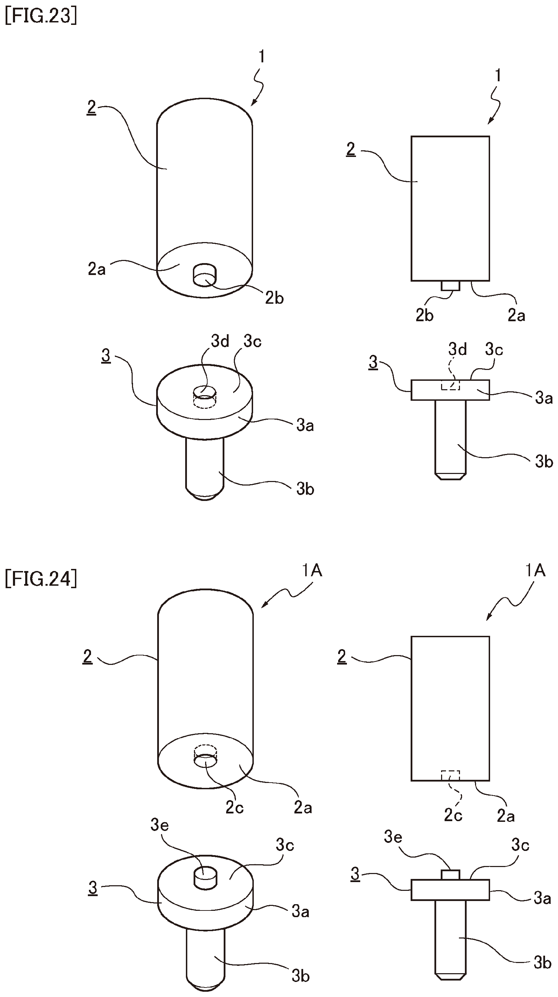

The mill blank assembly 1 of Comparative Example 1 shown in FIG. 23 includes a cylindrical blank portion 2, a holding portion 3 including a disk-shape pedestal 3a and a cylindrical pillar portion 3b, and an adhesive layer, not shown in the drawings, disposed between a first adhesion surface 2a of the blank portion 2 and a second adhesion surface 3c of the holding portion 3. The first adhesion surface 2a is formed on its center with a circular projection portion 2b, and the second adhesion surface 3c is formed in its center with a recess portion 3d. In Comparative Example 1, it is configured that the projection portion 2b and the recess portion 3d are fitted together at an adhesion between the first and second adhesion surfaces 2a, 3c.

The mill blank assembly 1 of Comparative Example 2 shown in FIG. 24 includes a cylindrical blank portion 2, a holding portion 3 including a disk-shape pedestal 3a and a cylindrical pillar portion 3b, and an adhesive layer, not shown in the drawings, disposed between a first adhesion surface 2a of the blank portion 2 and a second adhesion surface 3c of the holding portion 3. The first adhesion surface 2a is formed in its center with a circular recess portion 2c, and the second adhesion surface 3c is formed on its center with a projection portion 3e. The mill blank assembly 1A of Comparative Example 2 is also configured that the recess portion 2c and the projection portion 3e are fitted together at an adhesion between the first and second adhesion surfaces 2a, 3c.

In the mill blank assembly of Comparative Example 3, the adhesion surfaces of the pedestal and blank portion are flat with no unevenness. Arithmetic mean roughness of each adhesion surface is 0.2 µm.

As is seen from the results of Tables 1 to 7, the mill blank assemblies 10 of Examples 1 to 19 were 100 N or greater in peel adhesion strength N1 between the first adhesion surface 21 of the blank portion 20, etc. and the second adhesion surface 33 of the holding portion 30, etc., after adhesion between the blank portion 20, etc. and the holding portion 30, etc. and then standing still at 20 °C for 24 hours. Furthermore, they were 100 N or greater in peel adhesion strength N2 between the first adhesion surface 21 of the blank portion 20, etc. and the second adhesion surface 33 of the holding portion 30, etc., after storing at -30 °C for 24 hours and then standing still at room temperature (e.g., 20 °C) for 24 hours. They were 80 % or greater in ratio N2/N1.

In contrast, when it was attempted to measure the peel adhesion strength N2 of the mill blank assembly 1 of Comparative Example 1 and of the mill blank assembly of Comparative Example 3, the measurement was not possible due to their fractures during the measurement. Although the mill blank assembly 1A of Comparative Example 2 was 355 N in peel adhesion strength N1, the peel adhesion strength N2 was 38 N, that is, a large decrease in peel adhesion strength, and the ratio N2/N1 was also low as being 11 %.

From the above results, it was found that the mill blank assemblies 10 of Examples 1 to 40 maintain an adhesion strength necessary for appropriately bonding the blank portion 20, etc. and the holding portion 30, etc. and can further reduce the risk of fracture of the blank portion 20, etc. due to temperature change or vibration. In particular, it was found that the mill blank assemblies 10 of Examples 1 to 40 can reduce the risk of fracture of the blank portion 20 under extreme cold environments or vibration during transportation.

As above, the first to seventh embodiments and Examples 1 to 40 of the present disclosure have been described in detail with reference to the drawings, but each embodiment and each example are only examples of the present disclosure. The present disclosure is not limited to only the configurations of each embodiment and each example. It is needless to say that design changes, etc. are included in the present disclosure as long as they do not depart from the gist of the present disclosure.

With respect to the above description of each of the embodiments and examples, the following is further disclosed.
(1) A mill blank assembly includes:
   a blank portion;
   a holding portion that is configured to hold the blank portion; and
   an adhesive layer that is disposed between an adhesion surface of the blank portion and an adhesion surface of the holding portion, the adhesive layer bonding the blank portion and the holding portion together,
   wherein at least one of the adhesion surface of the blank portion and the adhesion surface of the holding portion has an uneven structure, the uneven structure comprising a projection portion and a recess portion, and
   wherein the projections and the recesses are configured not to mate with each other.
(2) The mill blank assembly according to the above (1), wherein the adhesion surface has an arithmetic mean roughness Ra of 0.2 µm or less as defined in JIS B0601:2013.
(3) The mill blank assembly according to the above (1) or (2), wherein the holding portion comprises a pedestal with the adhesion surface provided on one surface thereof, and a pillar portion that is configured to project toward an opposite side of the adhesion surface of the pedestal,
   wherein at least a part of an outer peripheral edge of the pedestal is formed as an arc shape centered on the pillar portion.
(4) The mill blank assembly according to any of the above (1) to (3), wherein the holding portion includes a pedestal with the adhesion surface provided on one surface thereof, and a pillar portion that is configured to project toward an opposite side of the adhesion surface of the pedestal,
   wherein both sides of the pedestal are cut out by two straight lines, and one of the sides is cut out over an area larger than that of another side.
(5) The mill blank assembly according to any of the above (1) to (4), wherein, the projection portion or the recess portion of the uneven structure is provided at a center of the adhesion surface or in vicinity of the center thereof.
(6) The mill blank assembly according to any of the above (1) to (5), wherein the projection portion and the recess portion of the uneven structure are provided in a concentric shape in a plan view.
(7) The mill blank assembly according to the above (6), wherein the projection portion and the recess portion of the uneven structure are provided in a concentric circular shape in the plan view.
(8) The mill blank assembly according to any of the above (1) to (7), wherein the uneven structure includes a circular projection portion that is provided at a center of the adhesion surface or in vicinity of the center thereof, an annular recess portion that is provided on an outer circumference of the circular projection portion, and an annular projection portion that is provided on an outer circumference of the annular recess portion.
(9) The mill blank assembly according to any of the above (1) to (8), wherein a thickness of the adhesive layer ranges from 3 µm to 450 µm.
(10) The mill blank assembly according to the above (9), wherein the thickness of the adhesive layer on the projection portion ranges from 3 µm to 50 µm.
(11) The mill blank assembly according to the above (9) or (10), wherein the thickness of the adhesive layer in the recess portion ranges from 80 µm to 400 µm.
(12) The mill blank assembly according to any one of the above (1) to (11), wherein a contact area (S5) between the adhesion surface of the blank portion and the adhesive layer is 8.0 % to 75.0 % of a total area (S1) of the adhesion surface of the blank portion.
(13) The mill blank assembly according to any of the above (1) to (12), wherein a height of the projection portion or a depth of the recess portion ranges from 80 µm to 400 µm.
(14) The mill blank assembly according to the above (13), wherein the height of the projection portion or the depth of the recess portion ranges preferably from 80 µm to 400 µm, more preferably from 90 µm to 380 µm, still more preferably from 100 µm to 350 µm, still furthermore preferably from 110 µm to 250 µm, particularly preferably from 130 µm to 240 µm, most preferably from 140 µm to 230 µm.
(15) The mill blank assembly according to any of the above (1) to (14), wherein a peel adhesion strength between the adhesion surface of the blank portion and the adhesion surface of the holding portion, after being stored at -30°C for 24 hours and then allowed to stand at room temperature for 24 hours, is 100 N or greater.
(16) The mill blank assembly according to any of the above (1) to (15), wherein a ratio N2/N1 is 70% or greater, where N1 is a peel adhesion strength between the adhesion surface of the blank portion and the adhesion surface of the holding portion after the blank portion and the holding portion are bonded and then allowed to stand at 20°C for 24 hours, and N2 is a peel adhesion strength between the adhesion surface of the blank portion and the adhesion surface of the holding portion after being stored at -30°C for 24 hours and then allowed to stand at room temperature for 24 hours.
(17) The mill blank assembly according to any of the above (1) to (16), wherein the adhesion surface of the holding portion includes the uneven structure, and the adhesion surface of the blank portion is flat.
(18) The mill blank assembly according to any of the above (1) to (17), wherein the blank portion has a Vickers hardness of 50 to 140 HV 5/30 as measured in accordance with JIS Z 2244:2009.
(19) The mill blank assembly according to any of the above (1) to (18), wherein the blank portion is made of a material including an oxide ceramic.
(20) The mill blank assembly according to any of the above (1) to (19),
   wherein the blank portion is made of a material including at least one selected from the group consisting of zirconia, alumina, and glass ceramics.
(21) The mill blank assembly according to any of the above (1) to (20), wherein the holding portion is made of a material including at least one of an aluminum alloy and an iron alloy.
(22) The mill blank assembly according to any of the above (1) to (21), wherein the mill blank assembly is for dental use.

In the present specification, the following is further disclosed.
(1) A mill blank assembly includes:
   a blank portion;
   a holding portion that is configured to hold the blank portion; and
   an adhesive layer that is disposed between an adhesion surface of the blank portion and an adhesion surface of the holding portion, the adhesive layer bonding the blank portion and the holding portion together,
   wherein a contact area (S5) between the adhesion surface of the blank portion and the adhesive layer is 8 % to 75 % of a total area (S1) of the adhesion surface of the blank portion.
(2) The mill blank assembly according to the above (1), wherein a thickness of the adhesive layer ranges from 5 µm to 450 µm.
(3) The mill blank assembly according to the above (1) or (2), wherein the adhesive layer includes a first adhesive layer having a thickness of 5 µm to 50 µm and/or a second adhesive layer having a thickness of 80 µm to 400 µm.
(4) The mill blank assembly according to any of the above (1) to (3), wherein a height of the projection portion or a depth of the recess portion ranges preferably from 80 µm to 400 µm, more preferably from 90 µm to 380 µm, still more preferably from 100 µm to 350 µm, still furthermore preferably from 110 µm to 250 µm, particularly preferably from 130 µm to 240 µm, most preferably from 140 µm to 230 µm.
(5) The mill blank assembly according to any of the above (1) to (4), wherein a contact area (S5) between the adhesion surface of the blank portion and the adhesive layer is 10.0 % to 90.0 % of a total area (S2) of the adhesion surface of the holding portion.
(6) The mill blank assembly according to any of the above (1) to (5), wherein a peel adhesion strength between the adhesion surface of the blank portion and the adhesion surface of the holding portion, after being stored at -30°C for 24 hours, is 100 N or greater.
(7) The mill blank assembly according to any of the above (1) to (6), wherein a ratio N2/N1 is 80% or greater, where N1 is a peel adhesion strength between the adhesion surface of the blank portion and the adhesion surface of the holding portion after the blank portion and the holding portion are bonded and then allowed to stand at 20°C for 24 hours, and N2 is a peel adhesion strength between the adhesion surface of the blank portion and the adhesion surface of the holding portion after being stored at -30°C for 24 hours and then allowed to stand at room temperature for 24 hours.
(8) The mill blank assembly according to any of the above (1) to (7), wherein the blank portion has a Vickers hardness of 50 to 140 HV 5/30 as measured in accordance with JIS Z 2244:2009.
(9) The mill blank assembly according to any of the above (1) to (8), wherein the blank portion is made of a material including an oxide ceramic.
(10) The mill blank assembly according to any of the above (1) to (9), wherein the blank portion is made of a material including at least one selected from the group consisting of zirconia, alumina, and glass ceramics.
(11) The mill blank assembly according to any of the above (1) to (10), wherein the holding portion is made of a material including at least one of an aluminum alloy and an iron alloy.
(12) The mill blank assembly according to any of the above (1) to (11), wherein the mill blank assembly is for dental use.

### [Cross-reference to Related Application]

The present application is based upon and claims the benefit of priority from Japanese Patent Application No. 2023-126825 filed to the Japan Patent Office on August 3, 2023, the entire disclosure of which is incorporated in its entirety in the present specification by reference.

## Claims

1. A mill blank assembly, comprising:
a blank portion;
a holding portion that is configured to hold the blank portion; and
an adhesive layer that is disposed between an adhesion surface of the blank portion and an adhesion surface of the holding portion, the adhesive layer bonding the blank portion and the holding portion together,
wherein at least one of the adhesion surface of the blank portion and the adhesion surface of the holding portion comprises an uneven structure, the uneven structure comprising a projection portion and a recess portion, and
wherein the projections and the recesses are configured not to mate with each other.

2. The mill blank assembly according to claim 1, wherein the adhesion surface has an arithmetic mean roughness Ra of 0.2 µm or less as defined in JIS B0601:2013.

3. The mill blank assembly according to claim 1, wherein the holding portion comprises a pedestal with the adhesion surface provided on one surface thereof, and a pillar portion that is configured to project toward an opposite side of the adhesion surface of the pedestal,
wherein at least a part of an outer peripheral edge of the pedestal is formed as an arc shape centered on the pillar portion.

4. The mill blank assembly according to claim 1, wherein the holding portion comprises a pedestal with the adhesion surface provided on one surface thereof, and a pillar portion that is configured to project toward an opposite side of the adhesion surface of the pedestal,
wherein both sides of the pedestal are cut out by two straight lines, and one of the sides is cut out over an area larger than that of another side.

5. The mill blank assembly according to claim 1, wherein, the projection portion or the recess portion of the uneven structure is provided at a center of the adhesion surface or in vicinity of the center thereof.

6. The mill blank assembly according to claim 1, wherein the projection portion and the recess portion of the uneven structure are provided in a concentric shape in a plan view.

7. The mill blank assembly according to claim 6, wherein the projection portion and the recess portion of the uneven structure are provided in a concentric circular shape in the plan view.

8. The mill blank assembly according to claim 1,
wherein the uneven structure comprises
a circular projection portion that is provided at a center of the adhesion surface or in vicinity of the center thereof,
an annular recess portion that is provided on an outer circumference of the circular projection portion, and
an annular projection portion that is provided on an outer circumference of the annular recess portion.

9. The mill blank assembly according to claim 1, wherein a thickness of the adhesive layer ranges from 5 µm to 450 µm.

10. The mill blank assembly according to claim 1, wherein a contact area between the adhesion surface of the blank portion and the adhesive layer is 8.0 % to 75.0 % of a total area of the adhesion surface of the blank portion.

11. The mill blank assembly according to claim 1, wherein a height of the projection portion or a depth of the recess portion ranges from 80 µm to 400 µm.

12. The mill blank assembly according to claim 1, wherein a peel adhesion strength between the adhesion surface of the blank portion and the adhesion surface of the holding portion, after being stored at -30°C for 24 hours and then allowed to stand at room temperature for 24 hours, is 100 N or greater.

13. The mill blank assembly according to claim 1, wherein a ratio N2/N1 is 70% or greater, where N1 is a peel adhesion strength between the adhesion surface of the blank portion and the adhesion surface of the holding portion after the blank portion and the holding portion are bonded and then allowed to stand at 20°C for 24 hours, and N2 is a peel adhesion strength between the adhesion surface of the blank portion and the adhesion surface of the holding portion after being stored at -30°C for 24 hours and then allowed to stand at room temperature for 24 hours.

14. The mill blank assembly according to claim 1, wherein the adhesion surface of the holding portion comprises the uneven structure, and the adhesion surface of the blank portion is flat.

15. The mill blank assembly according to claim 1, wherein the blank portion has a Vickers hardness of 50 to 140 HV 5/30 as measured in accordance with JIS Z 2244:2009.

16. The mill blank assembly according to claim 1, wherein the blank portion is made of a material comprising an oxide ceramic.

17. The mill blank assembly according to claim 1, wherein the blank portion is made of a material comprising at least one selected from the group consisting of zirconia, alumina, and glass ceramics.

18. The mill blank assembly according to claim 1, wherein the holding portion is made of a material comprising at least one of an aluminum alloy and an iron alloy.

19. The mill blank assembly according to any one of claims 1 to 18, wherein the mill blank assembly is for dental use.
